# EUROPEAN PATENT APPLICATION

(11) **EP 4 763 696 A1**
(43) Date of publication of application: **24.06.2026**
(21) Application number: 25226533.5
(22) Date of filing: 22.12.2025
(51) Int. Cl.: B64C 5/02, B64C 39/10, B64D 27/14

(54) **BLENDED WING BODY AIRCRAFT SYSTEM**

(30) Priority: 20.12.2024 US 202418990470
(71) Applicant: RTX Corporation, Farmington, CT 06032 (US)
(72) Inventor: MORTON, Jeffrey T., Manchester, 06040 (US); KUPRATIS, Daniel B., Wallingford, 06492 (US)
(74) Representative: Dehns

(57) **Abstract**

An airframe (22) includes a body (26), a first wing (28A), a second wing (28B) and a vane (54). The body extends longitudinally along a longitudinal centerline (34) from a forward end (36) of the body to an aft end (38) of the body. The first wing and the second wing are disposed to opposing lateral sides of the body. The vane projects vertically out from the body to a tip of the vane. The vane extends longitudinally along the body from a leading edge (66) of the vane to a trailing edge (68) of the vane. A first open rotor propulsion system (24A) is vertically above and mounted to the body. A second open rotor propulsion system (24B) is vertically above and mounted to the body. The vane is configured as a structural barrier laterally between the first open rotor propulsion system and the second open rotor propulsion system.

## Description

### BACKGROUND OF THE INVENTION

### 1. Technical Field

This invention relates generally to an aircraft and, more particularly, to an airframe component of the aircraft such as a vertical stabilizer.

### 2. Background Information

An aircraft may include a vertical stabilizer at an aft, downstream end of the aircraft. Various types and configurations of aircraft and vertical stabilizers are known in the art. While these known aircraft and vertical stabilizers have various benefits, there is still room in the art for improvement.

### SUMMARY OF THE INVENTION

According to an aspect of the present invention, an assembly is provided for an aircraft. This assembly includes an airframe, a first open rotor propulsion system and a second open rotor propulsion system. The airframe includes a body, a first wing, a second wing and a vane. The body extends longitudinally along a longitudinal centerline from a forward end of the body to an aft end of the body. The first wing and the second wing are disposed to opposing lateral sides of the body. The vane projects vertically out from the body to a tip of the vane. The vane extends longitudinally along the body from a leading edge of the vane to a trailing edge of the vane. The first open rotor propulsion system is vertically above and mounted to the body. The second open rotor propulsion system is vertically above and mounted to the body. The vane is configured as a structural barrier laterally between the first open rotor propulsion system and the second open rotor propulsion system.

According to another aspect of the present invention, another assembly is provided for an aircraft. This assembly includes an airframe, a first open rotor propulsion system and a second open rotor propulsion system. The airframe includes a body, a first wing and a second wing. The body extends longitudinally along a longitudinal centerline from a forward end of the body to an aft end of the body. The first wing and the second wing are disposed to opposing lateral sides of the body. The first wing projects spanwise out from the body to a tip of the first wing. The second wing projects spanwise out from the body to a tip of the second wing. The first propulsion system is mounted to the body. The first propulsion system includes a first propulsor rotor rotatable about a first axis. The first axis is angularly offset from the longitudinal centerline by a first offset angle between 0.5 degrees and 30 degrees. The second propulsion system is mounted to the body. The second propulsion system includes a second propulsor rotor rotatable about a second axis. The second axis is angularly offset from the longitudinal centerline by a second offset angle between 0.5 degrees and 30 degrees.

According to still another aspect of the present invention, an aircraft is provided that includes a blended wing body airframe, a first propulsion system and a second propulsion system. The blended wing body airframe extends longitudinally along a longitudinal centerline from a forward end of the blended wing body airframe to an aft end of the blended wing body airframe. The first propulsion system is mounted to the blended wing body airframe. The first propulsion system includes a first open propulsor rotor. The second propulsion system is mounted to the blended wing body airframe. The second propulsion system is longitudinally aligned with the first propulsion system along the longitudinal centerline. The second propulsion system includes a second open propulsor rotor. The aircraft is configured such that: debris thrown from the first open propulsor rotor will not hit the second propulsion system along a straight line trajectory; and/or debris thrown from the second open propulsor rotor will not hit the first propulsion system along a straight line trajectory.

Optionally and in accordance with any of the above, the second propulsion system may be outside of a first reference plane perpendicular to the first axis at the first propulsor rotor. The first propulsion system may be outside of a second reference plane perpendicular to the second axis at the second propulsor rotor.

Optionally and in accordance with any of the above, the first propulsor rotor may be a first open propulsor rotor. The second propulsor rotor may be a second open propulsor rotor.

Optionally and in accordance with any of the above, the airframe may also include a vane laterally between, longitudinally overlapping and vertically overlapping the first propulsion system and the second propulsion system.

Optionally and in accordance with any of the above, the vane may longitudinally overlap an entirety of the first open rotor propulsion system and/or an entirety of the second open rotor propulsion system.

Optionally and in accordance with any of the above, the vane may vertically overlap an entirety of the first open rotor propulsion system and/or an entirety of the second open rotor propulsion system.

Optionally and in accordance with any of the above, the vane may block a direct line of sight from the first open rotor propulsion system to the second open rotor propulsion system.

Optionally and in accordance with any of the above, the first open rotor propulsion system may include a first open propulsor rotor. The second open rotor propulsion system may include a second open propulsor rotor. The structural barrier may be laterally between, may longitudinally overlap and may vertically overlap the first open propulsor rotor and the second open propulsor rotor.

Optionally and in accordance with any of the above, the first open rotor propulsion system may include a first powerplant. The second open rotor propulsion system may include a second powerplant. The structural barrier may be laterally between, may longitudinally overlap and may vertically overlap the first powerplant and the second powerplant.

Optionally and in accordance with any of the above, the first open rotor propulsion system may also include a first open propulsor rotor. The first powerplant may be configured to drive rotation of the first open propulsor rotor. The second open rotor propulsion system may also include a second open propulsor rotor. The second powerplant may be configured to drive rotation of the second open propulsor rotor.

Optionally and in accordance with any of the above, the vane may be a first vane. The airframe may also include a second vane. The second vane may project vertically out from the body to a tip of the second vane. The second vane may extend longitudinally along the body from a leading edge of the second vane to a trailing edge of the second vane. The second vane may also be configured as the structural barrier laterally between the first open rotor propulsion system and the second open rotor propulsion system.

Optionally and in accordance with any of the above, a centerline of the first vane may be parallel with a centerline of the second vane.

Optionally and in accordance with any of the above, a centerline of the first vane may be angularly offset from a centerline of the second vane by an acute offset angle.

Optionally and in accordance with any of the above, a connection between the first vane and the body may be laterally spaced from a connection between the second vane and the body.

Optionally and in accordance with any of the above, the first vane and the second vane may laterally diverge from one another as the first vane and the second vane project vertically away from the body.

Optionally and in accordance with any of the above, the vane may be a first vane. The airframe may also include a second vane. The second vane may project vertically out from the body to a tip of the second vane. The second vane may extend longitudinally along the body from a leading edge of the second vane to a trailing edge of the second vane. The first open rotor propulsion system may be laterally between the first vane and the second vane.

Optionally and in accordance with any of the above, a centerline of the first vane may be parallel with a centerline of the second vane.

Optionally and in accordance with any of the above, a centerline of the first vane may be angularly offset from a centerline of the second vane by an acute offset angle.

Optionally and in accordance with any of the above, the first open rotor propulsion system may include a first open propulsor rotor rotatable about a first axis. The second open rotor propulsion system may include a second open propulsor rotor rotatable about a second axis. At least one of the first axis or the second axis may be parallel to the longitudinal centerline.

Optionally and in accordance with any of the above, the first open rotor propulsion system may include a first open propulsor rotor rotatable about a first axis. The second open rotor propulsion system may include a second open propulsor rotor rotatable about a second axis. At least one of the first axis or the second axis may be angularly offset from the longitudinal centerline by an acute offset angle.

Optionally and in accordance with any of the above, the assembly may also include a rudder pivotally attached to the vane at the trailing edge of the vane.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a plan view illustration of an aircraft.
FIG. 2 is a side view illustration of the aircraft.
FIG. 3 is a rear end view illustration of the aircraft.
FIG. 4A is a partial side view illustration of a section of the aircraft along a first side of a vertical stabilizer.
FIG. 4B is a partial side view illustration of a section of the aircraft along a second side of the vertical stabilizer.
FIGS. 5A-C are partial schematic sectional illustrations of the vertical stabilizer at various span locations.
FIG. 6 is a partial sectional illustration of a portion of the aircraft at an interface between an air circuit and a propulsion system.
FIG. 7 is a plan view illustration of a portion of the aircraft at the interface between the air circuit and the propulsion system.
FIGS. 8A-C are partial sectional illustrations of the vertical stabilizer with a door assembly in various positions.
FIGS. 9A-G are partial schematic sectional illustrations of the vertical stabilizer with an air system operating in various modes of operation, where each illustration includes an inner span section above an outer span section.
FIG. 10 is a partial rear end view illustration of the aircraft with another vertical stabilizer arrangement.
FIGS. 11A-G are partial schematic sectional illustrations of the vertical stabilizer of FIG. 10 with its air system operating in various modes of operation.
FIG. 12 is a partial rear end view illustration of the aircraft with multiple vertical stabilizers.
FIG. 13 is a plan view illustration of the aircraft with another air system arrangement.
FIG. 14 is a schematic illustration of a propulsion system for the aircraft.
FIG. 15 is a schematic illustration of a forward portion of the propulsion system of FIG. 14.
FIGS. 16A-C are schematic side illustrations of a portion of the aircraft with various vertical stabilizer arrangements next to the propulsion system with a tractor configuration.
FIGS. 17A-C are schematic side illustrations of a portion of the aircraft with various vertical stabilizer arrangements next to the propulsion system with a pusher configuration.
FIGS. 18A-C are schematic plan view illustrations of a portion of the aircraft with various vertical stabilizer arrangements between multiple propulsion systems.
FIGS. 19A-C are schematic plan view illustrations of a portion of the aircraft with various side vane arrangements about multiple propulsion systems.
FIGS. 20A and 20B are schematic plan view illustrations of a portion of the aircraft with its propulsion systems in various arrangements.
FIG. 21 is a schematic side illustration of a portion of the aircraft with a rudder attached to its vertical stabilizer.

### DETAILED DESCRIPTION

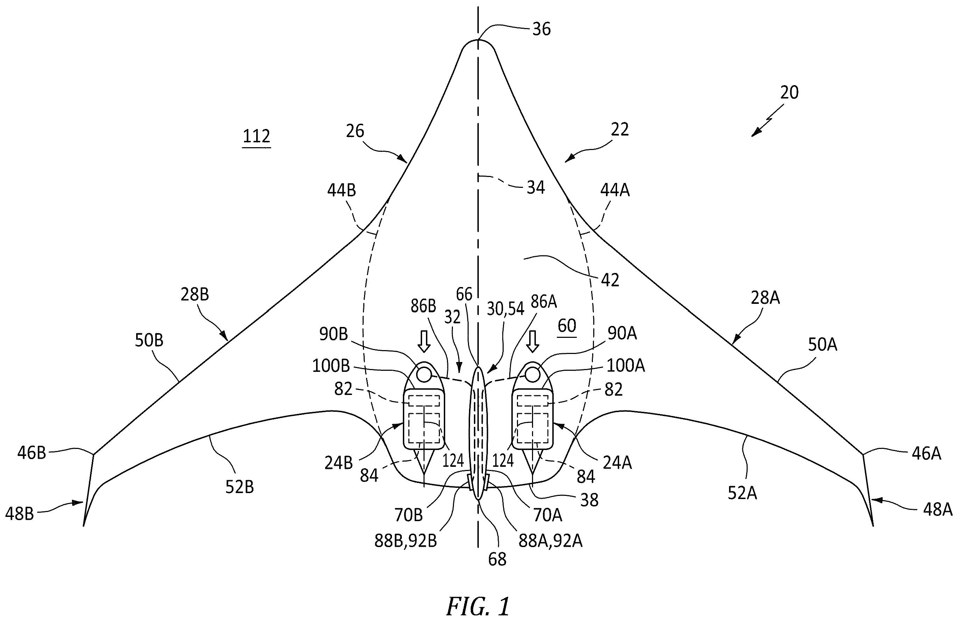

FIG. 1 illustrates a blended wing body (BWB) aircraft 20. This aircraft 20 includes an airframe 22 and one or more propulsion systems 24A and 24B (generally referred to as "24"). The aircraft airframe 22 includes a body 26 (e.g., a fuselage), one or more wings 28A and 28B (generally referred to as "28") and a vertical stabilizer 30. The aircraft 20 also includes an air system 32 for the vertical stabilizer 30.

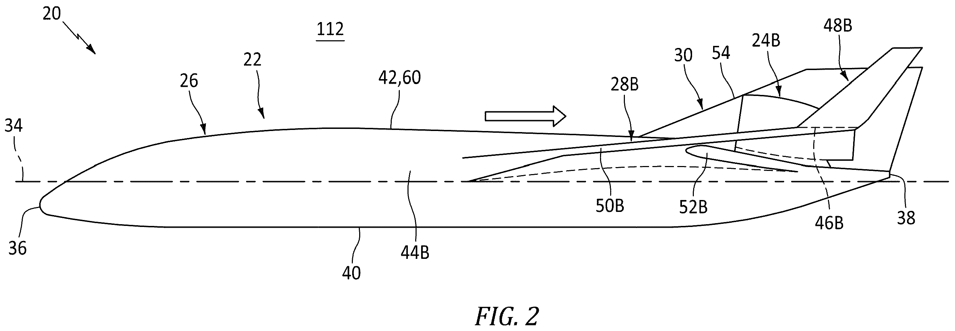

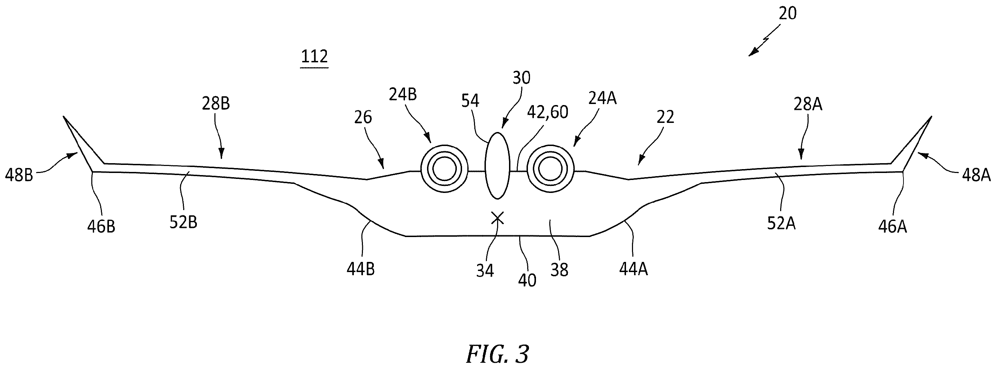

The aircraft body 26 extends longitudinally along a centerline 34 between and to a forward, upstream end 36 of the aircraft body 26 and an aft, downstream end 38 of the aircraft body 26. This centerline 34 may be a centerline axis of the aircraft 20, the aircraft airframe 22 and/or the aircraft body 26. Referring to FIG. 2, the centerline 34 may be substantially (e.g., within +/- five or ten degrees) or completely parallel with a horizon line when the aircraft 20 is flying in level flight. The aircraft body 26 extends vertically between and to opposing vertical bottom and top sides 40 and 42 of the aircraft body 26. The body bottom side 40 is vertically below the body top side 42 with respect to a gravitational direction when the aircraft 20 is flying in level flight. Referring to FIGS. 1 and 3, the aircraft body 26 extends laterally between and to opposing lateral sides 44A and 44B (generally referred to as "44") of the aircraft body 26.

The aircraft wings 28 of FIGS. 1 and 3 are arranged to the opposing lateral sides 44 of the aircraft body 26. Each of the aircraft wings 28 is connected to (e.g., fixed to) the aircraft body 26. Each of the aircraft wings 28A, 28B projects spanwise along a span line of the respective aircraft wing 28A, 28B out from the aircraft body 26, at the respective body lateral side 44A, 44B, to a distal tip 46A, 46B of the respective aircraft wing 28. At the wing tip 46A, 46B, the respective aircraft wing 28 may (or may not) be configured with a winglet 48A, 48B. Each of the aircraft wings 28 of FIG. 1 extends longitudinally along a mean line of the respective aircraft wing 28 from a leading edge 50A, 50B (generally referred to as "50") of the respective aircraft wing 28 to a trailing edge 52A, 52B (generally referred to as "52") of the respective aircraft wing 28. The wing leading edge 50 of FIG. 1, at a base of the respective aircraft wing 28, is longitudinally spaced aft, downstream from the body forward end 36. The wing trailing edge 52 of FIG. 1, at the wing base, is longitudinally spaced forward, upstream from the body aft end 38. The present invention, however, is not limited to such an exemplary aircraft wing arrangement.

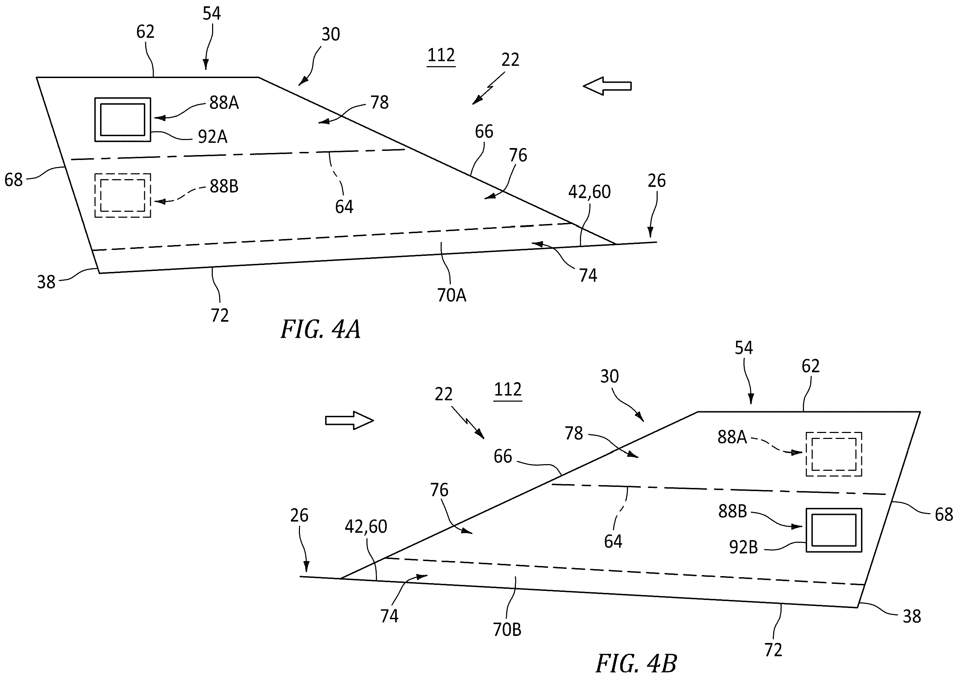

The vertical stabilizer 30 of FIGS. 1 and 3 is disposed along the body top side 42. This vertical stabilizer 30 is arranged laterally between the aircraft propulsion systems 24 longitudinally at (e.g., on, adjacent or proximate) the body aft end 38. Referring to FIGS. 4A and 4B, the vertical stabilizer 30 is configured as or may otherwise include a stationary vane 54.

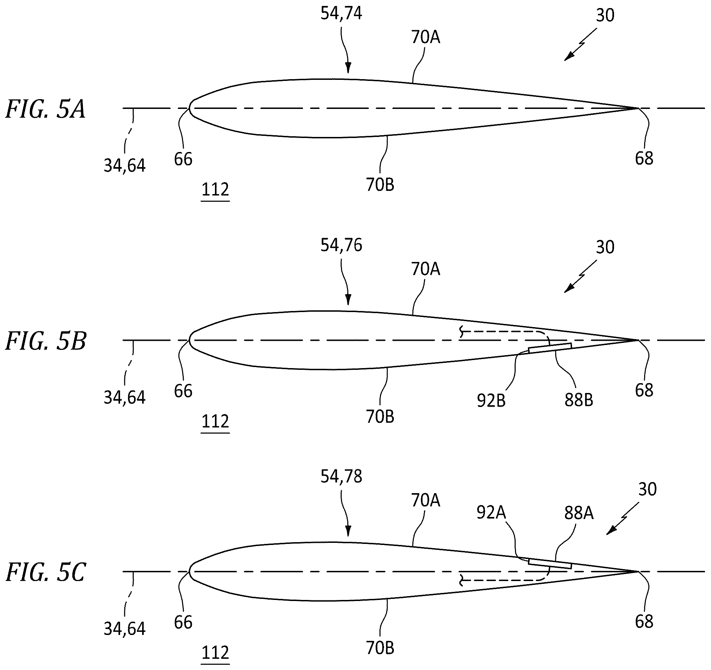

The vane 54 is connected to (e.g., fixed to) the aircraft body 26 at the body top side 42. This vane 54 projects spanwise along a span line of the vane 54 (e.g., vertically) away from the aircraft body 26 and its body top side 42. More particularly, the vane 54 of FIGS. 4A and 4B projects spanwise and vertically out from an exterior surface 60 (e.g., an outermost aerodynamic surface) of the aircraft body 26 at the body top side 42 to a distal tip 62 of the vane 54. The vane 54 extends longitudinally along a mean line 64 (e.g., a chord line where the vane 54 is symmetrical) of the vane 54 from a leading edge 66 of the vane 54 to a trailing edge 68 of the vane 54. Referring to FIGS. 5A-C, the vane 54 extends laterally (e.g., perpendicular to the mean line 64) between and to opposing lateral sides 70A and 70B (generally referred to as "70") of the vane 54. These vane lateral sides 70 extend longitudinally along the mean line 64 between and meet at the vane leading edge 66 and the vane trailing edge 68. Referring to FIGS. 4A and 4B, each of the vane elements 66, 68, 70A and 70B extends spanwise from a base 72 of the vane 54 at the body top side 42 to the vane tip 62.

The vane 54 of FIGS. 4A and 4B includes a base portion 74, an inner portion 76 and an outer portion 78. The base portion 74 may form a (e.g., complete) spanwise extending section of the vane 54 spanwise adjacent the aircraft body 26. The inner portion 76 may form a (e.g., complete) spanwise extending section of the vane 54 spanwise between the base portion 74 and the outer portion 78 of the vane 54. The inner portion 76 of FIGS. 4A and 4B, for example, extends spanwise from (or about) the base portion 74 to (or towards) the outer portion 78. The outer portion 78 may form a (e.g., complete) spanwise extending section of the vane 54 spanwise adjacent or near the vane tip 62. At one, some or all locations along each of the vane portions 74, 76, 78, referring to FIGS. 5A-5C, the vane mean line 64 of the respective vane portion 74, 76, 78 may be arranged parallel with the centerline 34. The vane mean line 64 may also be laterally aligned with the centerline 34. The present invention, however, is not limited to such an exemplary (e.g., zero-camber and/or zero stagger) vane arrangement.

Referring to FIG. 1, each of the aircraft propulsion systems 24 is connected to (e.g., fixed to) the aircraft body 26 at the body top side 42 and the body aft end 38. These aircraft propulsion systems 24 are arranged to the opposing lateral sides 70 of the vertical stabilizer 30 and its vane 54. The first propulsion system 24A of FIG. 1, for example, is spaced laterally from the vane 54 and its vane base 72 (see FIGS. 4A and 4B) at the vane first side 70A by a lateral first distance. The second propulsion system 24B of FIG. 1 is spaced laterally from the vane 54 and its vane base 72 (see FIGS. 4A and 4B) at the vane second side 70B by a lateral second distance, which may be equal to the first distance. The vane 54 may thereby be arranged laterally midway between the first propulsion system 24A and the second propulsion system 24B. The vane 54 of FIG. 1 may longitudinally overlap a portion or an entirety of each aircraft propulsion system 24 along the centerline 34. The vane 54 of FIGS. 2 and 3 may also vertically overlap a portion or an entirety of each aircraft propulsion system 24. The vane 54 of FIGS. 1-3 thereby provides a divider (e.g., a structural barrier and/or a flow separator) laterally between the first propulsion system 24A and the second propulsion system 24B. This divider may reduce effects of crosswinds on the aircraft propulsion systems 24 and/or may prevent other disruptions associated with the aircraft propulsion systems 24 being in close proximity, such as reducing a likelihood of bird ingestion into both aircraft propulsion systems 24 as well as facilitating noise reduction (e.g., provide additional surfaces for acoustic attenuation). Here, the vane leading edge 66 of FIG. 1 is disposed longitudinally forward, upstream of each aircraft propulsion system 24 along the centerline 34. Moreover, in an unlikely event a blade, a blade fragment and/or other debris is thrown radially outward from one of the propulsion systems (e.g., 24A or 24B), the divider may block that blade, blade fragment and/or other debris from impacting against the other one of the propulsion systems (e.g., 24B or 24A). Thus, in an unlikely event one of the propulsion systems (e.g., 24A or 24B) is damaged, the divider may prevent or reduce likelihood of damage to the other one of the propulsion systems (e.g., 24B or 24A). To this end, the vane 54 may be reinforced with debris shielding material; e.g., aramid material such as Kevlar ^{®} or the like.

Each aircraft propulsion system 24 of FIG. 1 is configured as a ducted rotor propulsion system. Examples of the ducted rotor propulsion system include, but are not limited to, a turbofan propulsion system and a turbojet propulsion system. Each aircraft propulsion system 24 of FIG. 1, for example, includes a ducted bladed rotor 82 (e.g., a fan rotor, a first stage compressor rotor, etc.) rotationally driven by an aircraft powerplant 84. This aircraft powerplant 84 may be configured as or otherwise include a turbine engine powered by traditional fuels or alternative fuels (e.g., sustainable aviation fuel, liquid hydrogen, etc.). Alternatively, the aircraft powerplant 84 may be configured as or otherwise include a rotary engine (e.g., a Wankel cycle engine), a hybrid-electric engine, or any other internal combustion (IC) engine or electric motor operable to drive rotation of the bladed rotor 82. The present invention, however, is not limited to the foregoing exemplary aircraft propulsion system and/or powerplant types or configurations. It is contemplated, for example, each aircraft propulsion system 24 may alternatively be configured as an open rotor propulsion system. Examples of the open rotor propulsion include, but are not limited to, a pusher fan propulsion system and a propfan propulsion system.

The air system 32 of FIG. 1 includes one or more air circuits 86A and 86B (generally referred to as "86") and one or more door assemblies 88A and 88B (generally referred to as "88"). For ease of description, the air circuits 86 are described below as fluidly discrete air circuits. The air circuits 86 of FIG. 1, for example, are not fluidly coupled together along their lengths. It is contemplated, however, the air circuits 86 may alternatively be fluidly coupled at one or more locations along their lengths in other embodiments.

Each air circuit 86A, 86B of FIG. 1 includes a circuit inlet 90A, 90B (generally referred to as "90") and a circuit outlet 92A, 92B (generally referred to as "92"). Each air circuit 86 extends within the airframe 22 from its respective circuit inlet 90 to its respective circuit outlet 92. An upstream section of each air circuit 86 of FIG. 1, for example, extends within the aircraft body 26 from its respective circuit inlet 90 to a downstream section of the respective air circuit 86. The downstream section of each air circuit 86 of FIG. 1 extends within the vane 54 from the respective upstream section of the respective air circuit 86 to its respective circuit outlet 92.

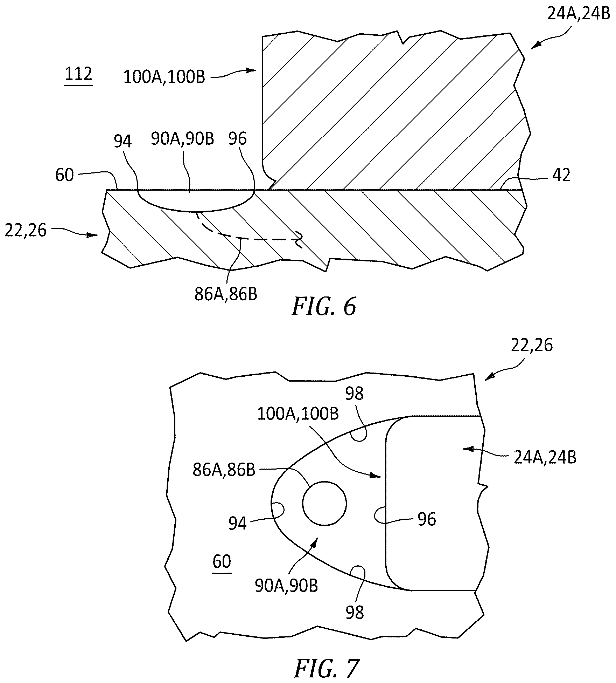

Each circuit inlet 90 is arranged with the aircraft body 26. Referring to FIG. 6, each circuit inlet 90 may be configured as a recess such as a dimple, a depression, a channel, a notch or the like in the aircraft body 26. The circuit inlet 90 of FIG. 6, for example, projects partially vertically into the aircraft body 26 from the body exterior surface 60. The circuit inlet 90 of FIG. 6 extends longitudinally within the aircraft body 26 and its body exterior surface 60 between opposing longitudinal ends 94 and 96 of the circuit inlet 90. The circuit inlet 90 of FIG. 7 extends laterally within the aircraft body 26 and its body exterior surface 60 between opposing lateral sides 98 of the circuit inlet 90. The present invention, however, is not limited to such an exemplary circuit inlet configuration. Each circuit inlet 90, for example, may alternatively be configured as a scoop which projects vertically out from the aircraft body 26 and its exterior surface 60. In another example, each circuit inlet 90 may be configured as a flush mount scoop such as a NACA type inlet.

Referring to FIG. 1, each circuit inlet 90 is laterally offset (e.g., located remote) from the vertical stabilizer 30 and its vane 54. The first circuit inlet 90A of FIG. 1, for example, is disposed to the vane first side 70A and laterally spaced from the vane 54 and its vane first side 70A by a lateral first distance. This first distance may be selected such that the first circuit inlet 90A is disposed upstream of an airflow inlet 100A into the first propulsion system 24A and its powerplant 84. The first circuit inlet 90A of FIG. 1, for example, laterally overlaps (e.g., is laterally aligned with) the first propulsion system 24A and its airflow inlet 100A; see also FIG. 7. Similarly, the second circuit inlet 90B of FIG. 1 is disposed to the vane second side 70B and laterally spaced from the vane 54 and its vane second side 70B by a lateral second distance. This second distance may be selected such that the second circuit inlet 90B is disposed upstream of an airflow inlet 100B into the second propulsion system 24B and its powerplant 84. The second circuit inlet 90B of FIG. 1, for example, laterally overlaps (e.g., is laterally aligned with) the second propulsion system 24B and its airflow inlet 100B; see also FIG. 7.

Each circuit outlet 92 of FIG. 1 is arranged with the vertical stabilizer 30 and its vane 54. Each circuit outlet 92A, 92B of FIG. 1, for example, is arranged in and along a respective one of the vane sides 70A, 70B. More particularly, the circuit outlets 92A and 92B are arranged to the opposing lateral sides 70A, 70B of the vane 54. For example, referring to FIGS. 4A and 5C, the first circuit outlet 92A is arranged along the vane first side 70A in the outer portion 78. Referring to FIGS. 4B and 5B, the second circuit outlet 92B is arranged along the vane second side 70B in the inner portion 76. With this arrangement, the first circuit outlet 92A (see FIG. 4A) is located radially outboard of the second circuit outlet 92B (see FIG. 4B) along the span of the vane 54.

Referring to FIGS. 4A and 4B, the circuit outlets 92 may be longitudinally aligned along the vane 54 and/or the centerline 34 (see also FIG. 1). Each circuit outlet 92A, 92B may be disposed longitudinally along the respective vane side 70A, 70B closer to the vane trailing edge 68 than the vane leading edge 66. Each circuit outlet 92A, 92B of FIG. 4A, 4B, for example, may be located along a downstream most (e.g., one-half, one-third, one-quarter) section of the respective vane side 70A, 70B towards the vane trailing edge 68.

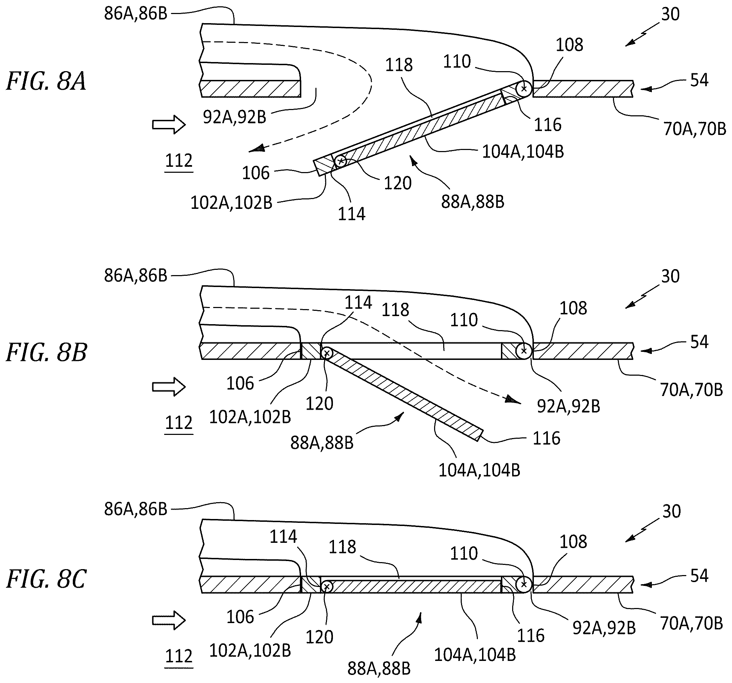

Referring to FIG. 5B, 5C, each door assembly 88A, 88B is arranged at a respective one of the circuit outlets 92A, 92B. Referring to FIGS. 8A-C, each door assembly 88 may be configured as a multi-pivot axis door. Each door assembly 88A, 88B of FIGS. 8A-C, for example, includes an outer door 102A, 102B (generally referred to as "102") and an inner door 104A, 104B (generally referred to as "104").

The outer door 102 extends longitudinally between and to a forward, upstream end 106 of the outer door 102 and an aft, downstream end 108 of the outer door 102. This outer door 102 is arranged with (e.g., seated in or disposed adjacent) a respective one of the circuit outlets 92A, 92B along a respective one of the vane sides 70A, 70B. The outer door 102 is moveably mounted to the vane 54. The outer door 102 of FIGS. 8A-C, for example, is pivotally mounted to an internal support structure of the vane 54 at (or near) the outer door downstream end 108. With this arrangement, the outer door 102 is configured to pivot about a downstream pivot axis 110 of the respective door assembly 88 (and/or otherwise move) between a (e.g., fully) closed / stowed position of FIG. 8C (see also FIG. 8B) and an (e.g., fully) open / deployed position of FIG. 8A. Here, the outer door upstream end 106 is displaced laterally outward away from the respective vane side 70A, 70B and projects laterally into an environment 112 (e.g., an ambient environment) external to the vertical stabilizer 30 and its vane 54 and, more generally, external to the aircraft 20.

The inner door 104 extends longitudinally between and to a forward, upstream end 114 of the inner door 104 and an aft, downstream end 116 of the inner door 104. This inner door 104 is arranged with (e.g., seated in or disposed adjacent) a port 118 in the respective outer door 102. The inner door 104 is moveably mounted to the respective outer door 102. The inner door 104 of FIGS. 8A-C, for example, is pivotally mounted to the respective outer door 102 at (or near) the inner door upstream end 114. The outer door 102 may thereby form a frame for and extend around the inner door 104, which frame couples the inner door 104 to the vane 54 at a respective one of the circuit outlets 92A, 92B along a respective one of the vane sides 70A, 70B. With this arrangement, the inner door 104 is configured to pivot about an upstream pivot axis 120 of the respective door assembly 88 (and/or otherwise move) between a (e.g., fully) closed / stowed position of FIG. 8C (see also FIG. 8A) and an (e.g., fully) open / deployed position of FIG. 8B. Here, the inner door downstream end 116 is displaced laterally outward away from the respective vane side 70A, 70B (and the respective outer door 102) and projects laterally into the external environment 112. The upstream pivot axis 120 may be parallel with and spaced longitudinally from the downstream pivot axis 110.

Referring to FIGS. 8A-C, each door assembly 88 is configured to regulate (e.g., open, meter, close) airflow exhausted from the respective circuit outlet 92 into the external environment 112. Each door assembly 88 is also configured to guide (e.g., direct) the airflow exhausted from respective circuit outlet 92 into the external environment 112. For example, the outer door 102 may move from its closed position of FIG. 8C (or from the position illustrated in FIG. 8B) to its open position of FIG. 8A to open (e.g., uncover) the respective circuit outlet 92. Here, the inner door 104 may remain in its closed position (or be moved to its closed position) and, thus, move (e.g., pivot) with the respective outer door 102 to the arrangement of FIG. 8A. With this arrangement of FIG. 8A, the respective door assembly 88 and its doors 102 and 104 are configured to guide (e.g., direct) the airflow exhausted from the respective circuit outlet 92 along a forward, upstream trajectory; e.g., longitudinally towards the vane leading edge 66 of FIG. 5B, 5C. In another example, the inner door 104 may move from its closed position of FIG. 8C (or from the position illustrated in FIG. 8A) to its open position of FIG. 8B to open (e.g., uncover) the respective circuit outlet 92 via the respective outer door port 118. Here, the outer door 102 may remain in its closed position (or be moved to its closed position). With this arrangement of FIG. 8B, the respective door assembly 88 and inner door 104 are configured to guide (e.g., direct) the airflow exhausted from the respective circuit outlet 92 along an aft, downstream trajectory; e.g., longitudinally towards the vane trailing edge 68 of FIG. 5B, 5C. In still another example, the outer door 102 and/or the inner door 104 may each move to its closed position of FIG. 8C to block (e.g., obstruct) flow through the respective circuit outlet 92. In the closed arrangement of FIG. 8C, the door assembly 88 may be configured to substantially or completely fluidly decouple the respective air circuit 86 from the exterior environment 112. Though illustrated as transitioning from a closed position of FIG. 8C to an open position of either FIG. 8A or 8B, it is understood that the outer door 102 may be configured to only move to one of the illustrated open positions. That is, in some examples, the outer door 102 may be configured to transition between the closed position of FIG. 8C to the open position of FIG. 8A or the open position of FIG. 8B, but not both. In such examples, the outer door may be activated by either a downstream pivot axis 110 or an upstream pivot axis 120, but not both.

During operation of the air system 32 of FIG. 1, each circuit inlet 90 may receive boundary layer air flowing along a respective upstream portion of the body exterior surface 60. This boundary layer air is directed into the respective air circuit 86 through its circuit inlet 90. The air flows through each air circuit 86 to its respective circuit outlet 92 where that air is exhausted from the air system 32 into the external environment 112 through the respective circuit outlet 92 and the respective open door assembly 88 (e.g., see FIG. 8A or 8B). By removing the boundary layer air upstream of the aircraft propulsion systems 24, each aircraft propulsion system 24 may receive a substantially free stream of air (e.g., clean air, low turbulence air, etc.) at its airflow inlet 100. By placing the circuit outlets 92A and 92B along the vane sides 70A and 70B, movement of air within the external environment 112 along the vane 54 may facilitate a pumping effect of the air through the air circuits 86. With this arrangement, the air system 32 operates as a passive air system. The air system 32, for example, utilizes the flow of air along the aircraft 20 within the external environment 112 to power its operation. By contrast, an active air system may utilize a pump or a compressor to boost or facilitate air flow.

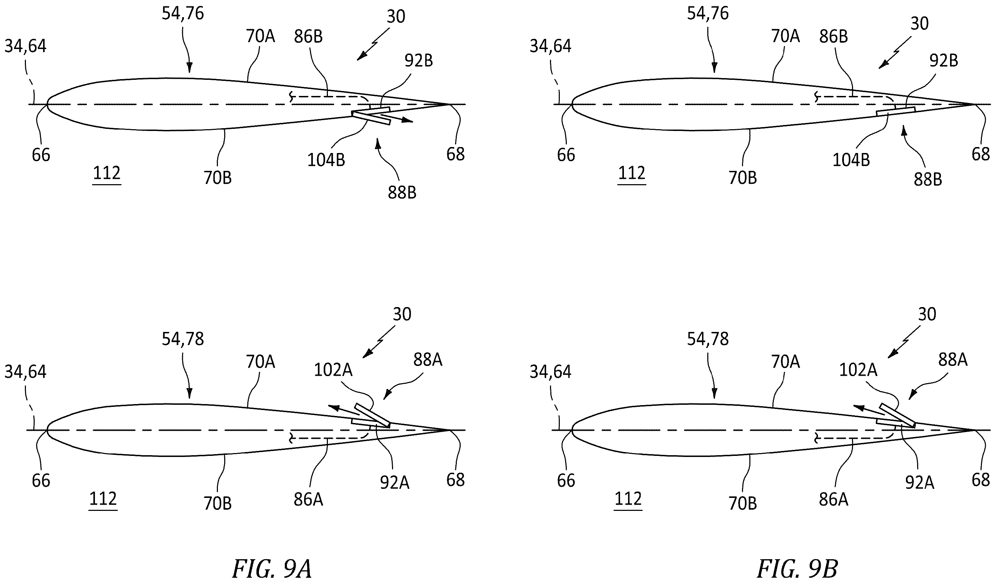

Exhausting the air from one or more of the circuit outlets 92A and 92B may also be utilized to facilitate aircraft maneuvering and/or alter aircraft performance during flight. The air system 32, for example, may be operated in various modes of operation, some of which operating modes are schematically exemplified in FIGS. 9A-G.

Referring to FIG. 9A, during a first (e.g., starboard, right side) yaw mode of operation, the outer door 102A of the first door assembly 88A may be moved to its open position (see also FIG. 8A) and the inner door 104B of the second door assembly 88B may be moved to its open position (see also FIG. 8B). Here, the air exhausted from the first circuit outlet 92A is forward, upstream of the air exhausted from the second circuit outlet 92B. The air exhausted from the first circuit outlet 92A therefore initially may flow along a portion of the vane 54 with a greater lateral thickness than the air exhausted from the second circuit outlet 92B. Moreover, the air exhausted from the first circuit outlet 92A is (at least initially) directed in the forward, upstream direction by the first door assembly 88A and the air exhausted from the second circuit outlet 92B is directed in the aft, downstream direction (e.g., generally along the vane second side 70B) by the second door assembly 88B. With this arrangement, the air exhausted from the first circuit outlet 92A may push air within the external environment 112 further laterally away from the vane 54 than the air exhausted from the second circuit outlet 92B. The air exhausted from the first circuit outlet 92A may thereby increase an effective camber of the outer portion 78 of the vane 54. This increase in the effective camber may generate additional lift to the second lateral direction such that the aircraft 20 yaws to the starboard; e.g., without use of a traditional physical rudder, such as to trim the aircraft 20 in the yaw axis. In some embodiments, referring to FIG. 9B, this effect may be increased by moving the second door assembly 88B to its closed position (see also FIG. 8C).

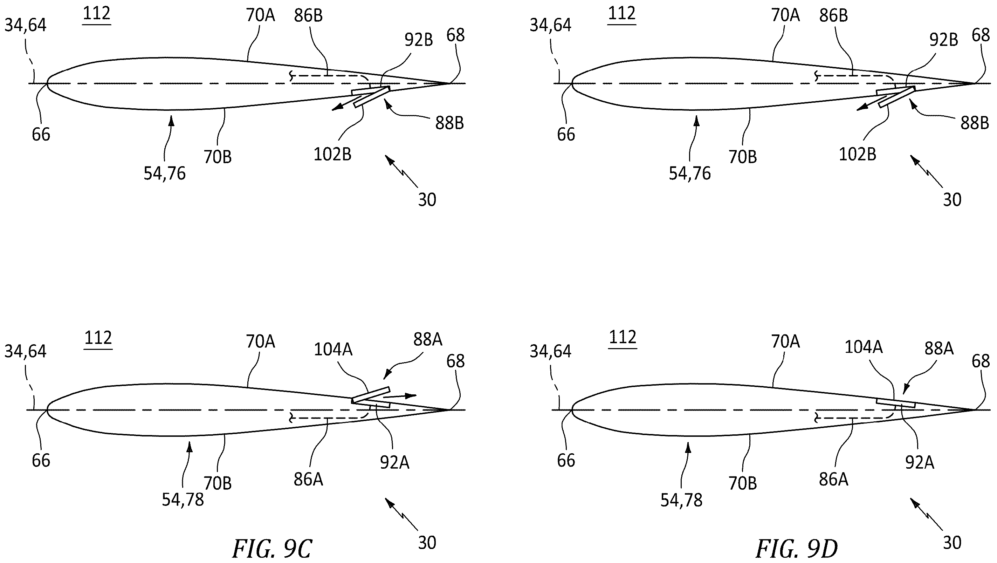

Referring to FIG. 9C, during a second (e.g., port, left side) yaw mode of operation, the inner door 104A of the first door assembly 88A may be moved to its open position (see also FIG. 8B) and the outer door 102B of the second door assembly 88B may be moved to its open position (see also FIG. 8A). Here, the air exhausted from the second circuit outlet 92B is forward, upstream of the air exhausted from the first circuit outlet 92A. The air exhausted from the second circuit outlet 92B therefore initially may flow along a portion of the vane 54 with a greater lateral thickness than the air exhausted from the first circuit outlet 92A. Moreover, the air exhausted from the second circuit outlet 92B is (at least initially) directed in the forward, upstream direction by the second door assembly 88B and the air exhausted from the first circuit outlet 92A is directed in the aft, downstream direction (e.g., generally along the vane first side 70A) by the first door assembly 88A. With this arrangement, the air exhausted from the second circuit outlet 92B may push air within the external environment 112 further laterally away from the vane 54 than the air exhausted from the first circuit outlet 92A. The air exhausted from the second circuit outlet 92B may thereby increase an effective camber of the inner portion 76 of the vane 54. This increase in the effective camber may generate additional lift to the first lateral direction such that the aircraft 20 yaws to the port; e.g., without use of a traditional physical rudder. In some embodiments, referring to FIG. 9D, this effect may be increased by moving the first door assembly 88A to its closed position (see also FIG. 8C).

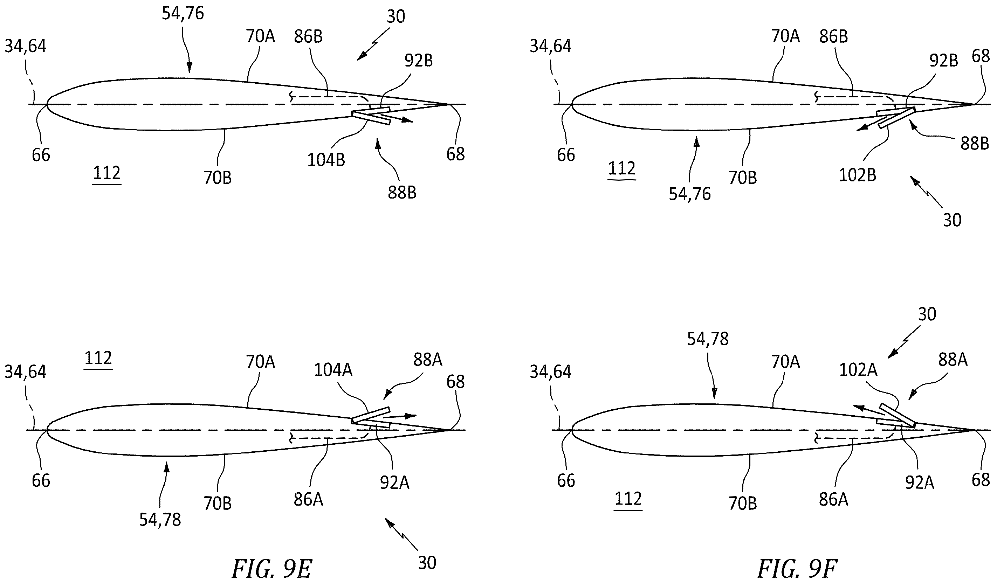

Referring to FIG. 9E, during another mode of operation, the inner door 104A of the first door assembly 88A and the inner door 104B of the second door assembly 88B may each be moved to their open positions (see also FIG. 8B). With this arrangement, the open door assemblies 88 facilitate removal of boundary layer air in front of the propulsion system airflow inlets 100 (see FIG. 1) without generating a yaw force. Moreover, by directing the air exhausted from the first circuit outlet 92A and the second circuit outlet 92B in the aft, downstream direction, this exhaust air may have minimal affect on aircraft drag. By contrast, referring to FIG. 9F, the outer door 102A of the first door assembly 88A and the outer door 102B of the second door assembly 88B may alternatively be moved to their open positions (see also FIG. 8A). With this arrangement, the open door assemblies 88 still facilitate removal of boundary layer air while also increasing aircraft drag. The air system, for example, may be operated in the mode of operation of FIG. 9F to decrease aircraft speed.

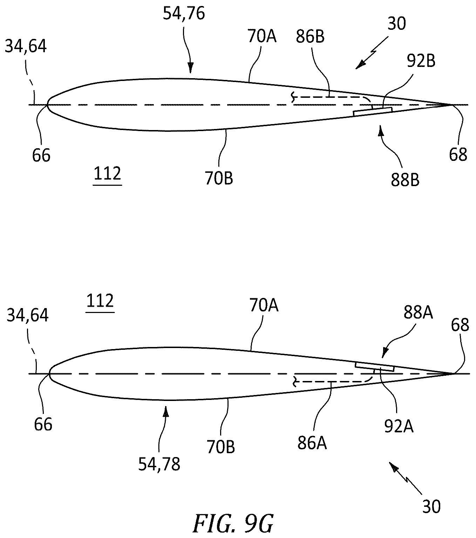

Referring to FIG. 9G, during still another mode of operation, the first door assembly 88A and the second door assembly 88B may both be closed (see also FIG. 8C). With this arrangement, aircraft drag may be further reduced. However, the propulsion system airflow inlets 100 of FIG. 1 may receive the boundary layer air that is otherwise removed through the circuit inlets 90 during the operating modes of FIGS. 9A-F.

In some embodiments, the vertical stabilizer 30 and its vane 54 may be utilized for lightning strike protection. The vertical stabilizer 30 and its vane 54 may also or alternatively be utilized to increase a radar signature of the aircraft 20 where that aircraft 20 is used for civilian aviation.

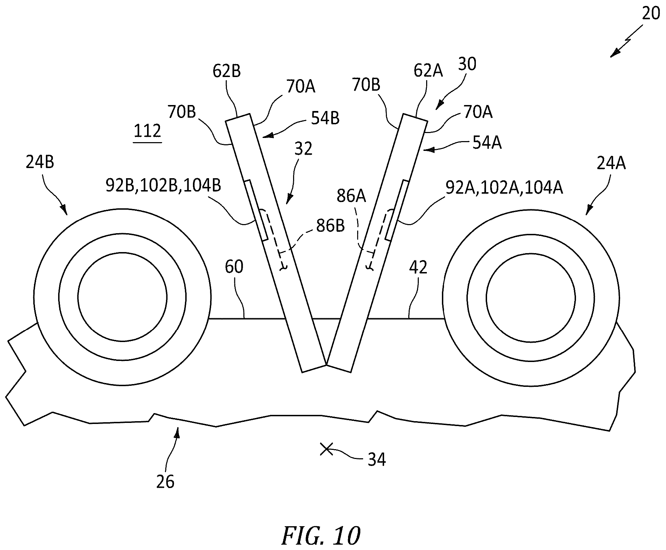

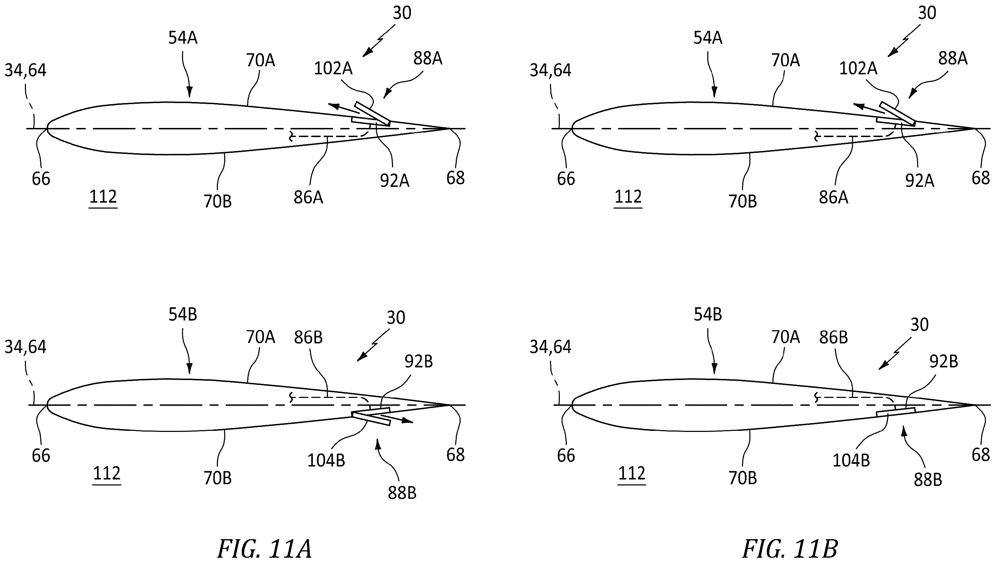

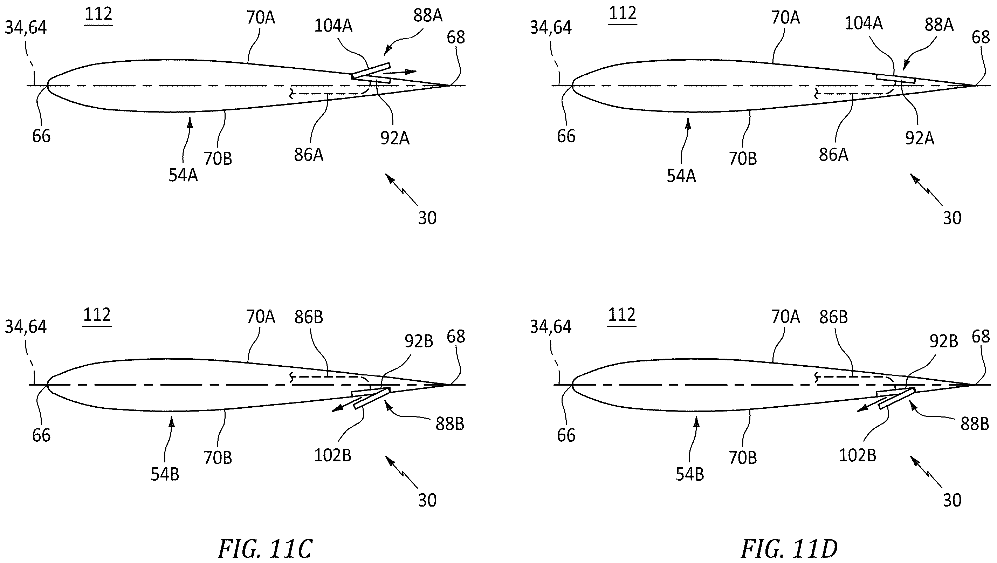

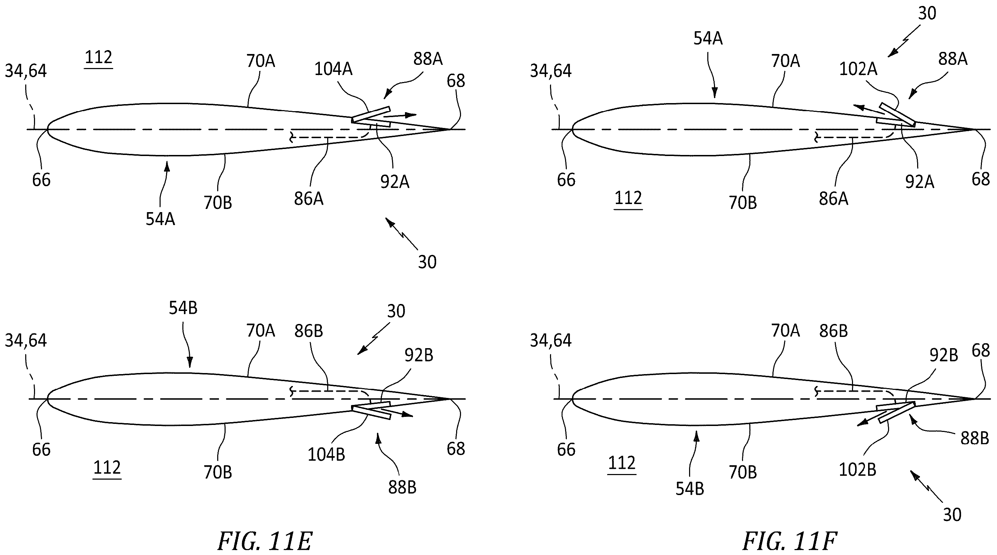

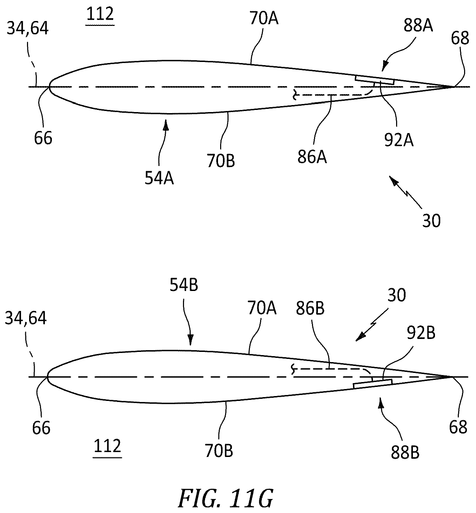

The vertical stabilizer 30 is described above with a single vane 54. The present invention, however, is not limited to such an exemplary arrangement. For example, referring to FIG. 10, the vertical stabilizer 30 may alternatively include multiple vanes 54A and 54B (generally referred to as "54"). Each vane 54A, 54B of FIG. 10 is connected to the aircraft body 26, and may project spanwise out from the aircraft body 26 to its respective vane tip 62A, 62B (generally referred to as "62"). The first vane 54A may be configured with the first air circuit and its first circuit outlet. The second vane 54B may be configured with the second air circuit and its second circuit outlet. Like described above with respect to FIGS. 9A-G, the air system 32 may be operated in various modes of operation, some of which operating modes are schematically exemplified in FIGS. 11A-11G. FIG. 11A illustrates a first (e.g., starboard, right side) yaw mode of operation similar to that of FIG. 9A described above. FIG. 11B illustrates another (e.g., starboard, right side) yaw mode of operation similar to that of FIG. 9B described above. FIG. 11C illustrates a second (e.g., port, left side) yaw mode of operation similar to that of FIG. 9C described above. FIG. 11D illustrates another (e.g., port, left side) yaw mode of operation similar to that of FIG. 9D described above. FIG. 11E illustrates another mode of operation similar to that of FIG. 9E described above. FIG. 11F illustrates another mode of operation similar to that of FIG. 9F described above. FIG. 11G illustrates still another mode of operation similar to that of FIG. 9G described above.

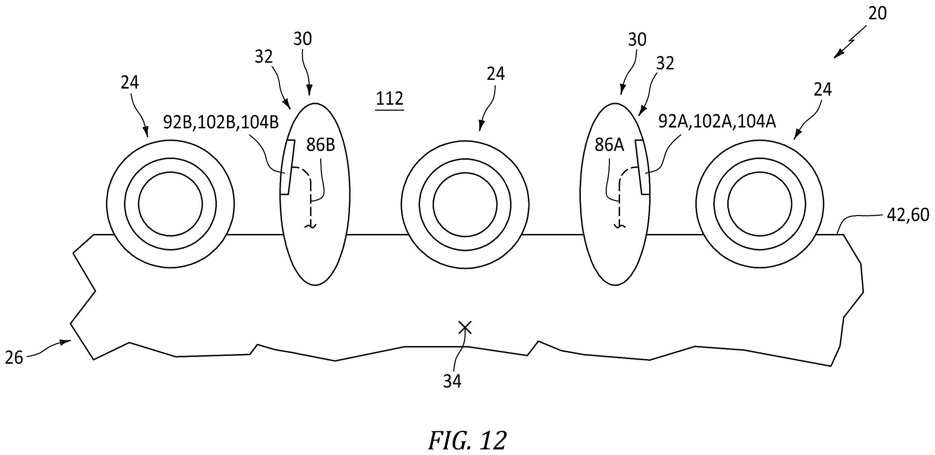

In some embodiments, referring to FIGS. 3 and 10, the aircraft 20 may be configured with a single vertical stabilizer 30. In other embodiments, referring to FIG. 12, the aircraft 20 may be configured with multiple of the vertical stabilizers 30, where each vertical stabilizer 30 is arranged laterally between a respective laterally neighboring pair of the aircraft propulsion systems 24. Here, the air system 32 may be operated in various modes of operation similar to that described above and illustrated in FIGS. 11A-11G.

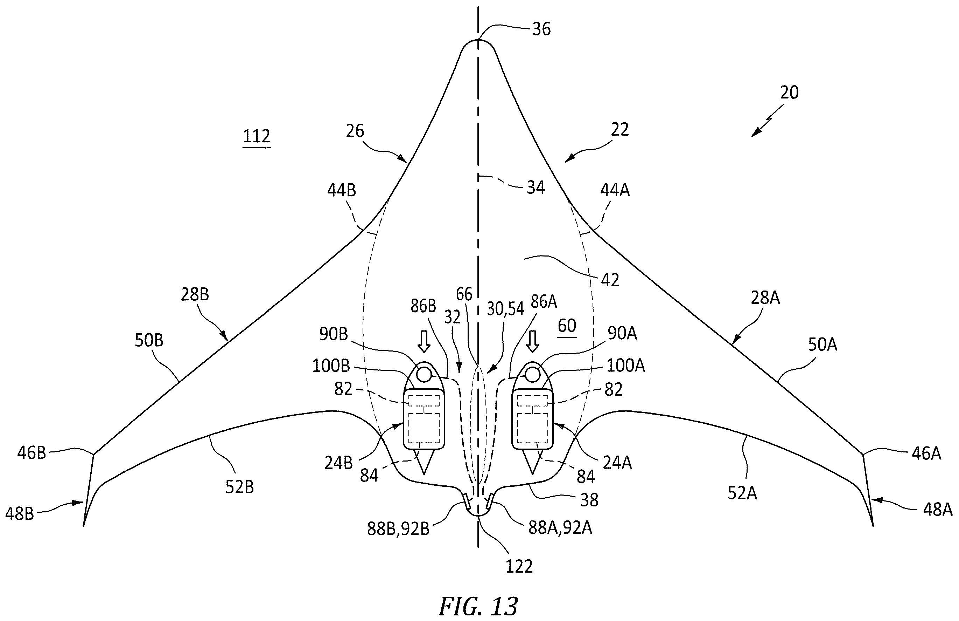

While the air system 32 of FIG. 1 is described above as being configured with both the aircraft body 26 and the vertical stabilizer 30 (or multiple vertical stabilizers 30), the present invention is not limited to such exemplary arrangements. It is contemplated, for example, the air system 32 may be configured discrete from the vertical stabilizer 30 (or multiple vertical stabilizers 30). The aircraft body 26 of FIG. 13, for example, is configured with a protrusion 122 (e.g., a tail) which projects longitudinally out from a base of the aircraft body 26 at the body aft end 38. Here, the first door assembly 88A and the associated first circuit outlet 92A are disposed on a first side of the protrusion 122. The second door assembly 88B and the associated second circuit outlet 92B are disposed on a second side of the protrusion 122 laterally opposite the first side. With this arrangement, it is contemplated the aircraft airframe 22 may be configured with at least one vertical stabilizer 30 (see dashed line) or with no vertical stabilizer.

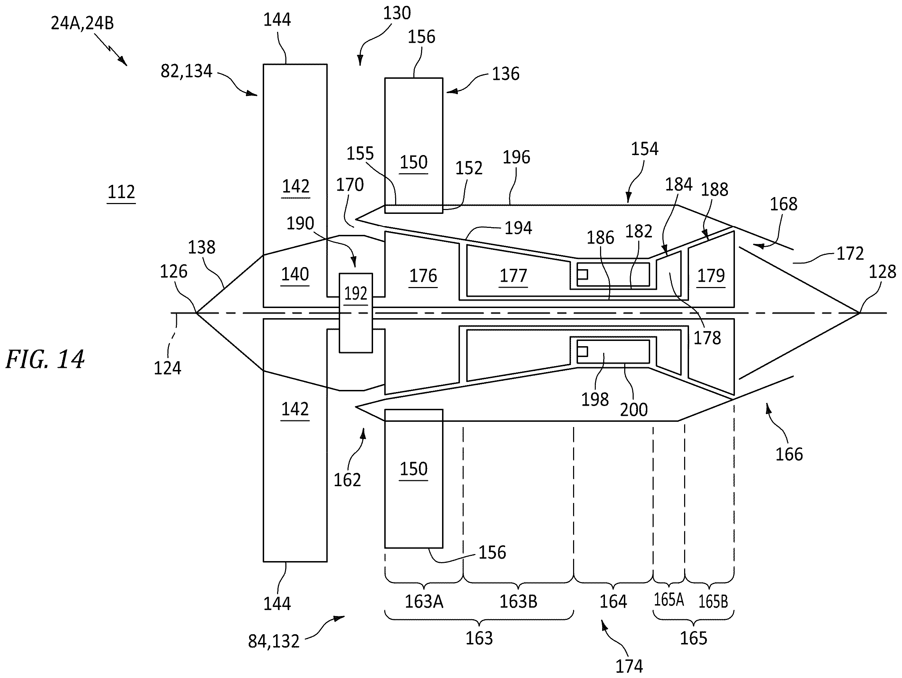

FIG. 14 is a schematic illustration of an exemplary one of the aircraft propulsion systems 24 configured as the open rotor propulsion system. More particularly, the aircraft propulsion system 24 of FIG. 14 is configured with a single open rotor and swirl recovery vane (SRV) architecture. Herein, the term "open" may describe a propulsion system section and/or a propulsion system component which is open to the external environment 112.

The aircraft propulsion system 24 of FIG. 14 extends axially along an axis 124 between an upstream, forward end 126 of the aircraft propulsion system 24 and a downstream, aft end 128 of the aircraft propulsion system 24. The propulsion system axis 124 may be a centerline axis of the aircraft propulsion system 24 and/or a centerline axis of one or more members of the aircraft propulsion system 24. The propulsion system axis 124 may also or alternatively be a rotational axis of one or more members of the aircraft propulsion system 24. The aircraft propulsion system 24 of FIG. 14 includes an open rotor propulsion section 130 (e.g., an open rotor propulsion module) and a gas turbine engine 132 as the aircraft powerplant 84.

The propulsion section 130 of FIG. 14 includes an open propulsor rotor 134 (e.g., the bladed rotor 82) and an open guide vane structure 136. These propulsion section members 134 and 136 are un-ducted components of the aircraft propulsion system 24 and its propulsion section 130. The propulsion section 130 of FIG. 14 also includes a nose cone 138 disposed at the propulsion system forward end 126. Briefly, this nose cone 138 may be configured as a spinner which is rotatable with the propulsor rotor 134 about the propulsion system axis 124. Alternatively, the nose cone 138 may be configured as a stationary structure of the propulsion section 130.

The propulsor rotor 134 includes a rotor base 140 (e.g., a disk or a hub) and a plurality of open propulsor blades 142 (e.g., airfoils). The propulsor blades 142 are arranged and may be equispaced circumferentially about the rotor base 140 and the propulsion system axis 124 in an array (e.g., a circular array), which array of propulsor blades 142 may be unshrouded or alternatively shrouded by a tubular propulsor rotor shroud dedicated to the propulsor rotor 134 for example. Each of the propulsor blades 142 is connected to (e.g., formed integral with or otherwise attached to) the rotor base 140. Each of the propulsor blades 142 projects spanwise along a span line of the respective propulsor blade 142 (e.g., radially relative to the propulsion system axis 124) out from an exterior surface of the rotor base 140, into the external environment 112, to a distal tip 144 of the respective propulsor blade 142. Each propulsor blade 142 is thereby configured as an un-ducted propulsor blade which is exposed to (e.g., disposed in) the surrounding external environment 112.

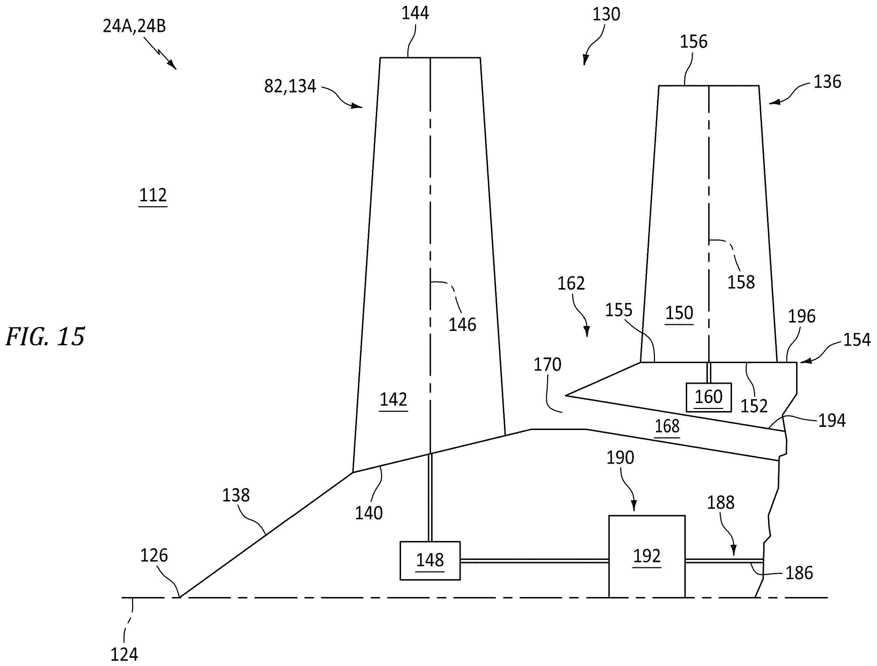

Referring to FIG. 15, each propulsor blade 142 may be configured to pivot about a respective blade pivot axis 146. This blade pivot axis 146 extends radially relative to the propulsion system axis 124. The blade pivot axis 146 of FIG. 15, for example, is arranged perpendicular to the propulsion system axis 124 when viewed, for example, in a longitudinal reference plane parallel to (e.g., including) the propulsion system axis 124; e.g., the plane of FIG. 15. Each propulsor blade 142 of FIG. 15 is operatively coupled with a blade actuation system 148. This blade actuation system 148 is configured to pivot each propulsor blade 142 about its own respective blade pivot axis 146. By pivoting each propulsor blade 142 about its blade pivot axis 146, a pitch of the respective propulsor blade 142 may be changed. Note, while the blade pivot axis 146 is shown in FIG. 15 as being perpendicular to the propulsion system axis 124, it is contemplated this blade pivot axis 146 may or may not be coincident with the propulsion system axis 124. Moreover, it is contemplated each blade pivot axis 146 may alternatively be angularly offset from the propulsion system axis 124 by an acute angle or an obtuse angle when viewed, for example, in the longitudinal reference plane. Of course, it is contemplated some or all of the propulsor blades 142 may be alternatively moved to change the propulsor blade pitch. Moreover, it is contemplated some or all of the propulsor blades 142 may alternatively be fixed pitch propulsor blades in other embodiments.

The guide vane structure 136 of FIG. 14 includes a plurality of open exit guide vanes 150 (e.g., airfoils) that are arranged and may be equispaced circumferentially about the propulsion system axis 124 in an array (e.g., a circular array), which array of guide vanes 150 may be unshrouded or alternatively shrouded by a tubular guide vane shroud dedicated to the guide vane structure 136 for example. This guide vane structure 136 and its guide vanes 150 are arranged axially next to (e.g., adjacent) the propulsor rotor 134 and its propulsor blades 142. The guide vane structure 136 and its guide vanes 150 of FIG. 14, for example, are arranged downstream of the propulsor rotor 134 and its propulsor blades 142, without (e.g., any) other elements axially therebetween to obstruct, turn and/or otherwise influence the air propelled by the propulsor rotor 134 to the guide vane structure 136 for example. Each of the guide vanes 150 of FIG. 14 is coupled to a support structure 152 of a stationary housing structure 154 for the aircraft propulsion system 24. This support structure 152 may be configured as or otherwise include a support frame, a case and/or another fixed structure of the housing structure 154. Each of the guide vanes 150 projects spanwise along a span line of the respective guide vane 150 (e.g., radially relative to the propulsion system axis 124) out from an exterior surface 155 of the housing structure 154, into the external environment 112, to a distal tip 156 of the respective guide vane 150. Here, the exterior surface 155 radially borders the external environment 112 and forms an exterior aerodynamic flow surface of the aircraft propulsion system 24. Each guide vane 150 is thereby configured as an un-ducted guide vane which is exposed to (e.g., disposed in) the surrounding external environment 112.

Referring to FIG. 15, each guide vane 150 may be configured to pivot about a respective vane pivot axis 158. This vane pivot axis 158 extends radially relative to the propulsion system axis 124. The vane pivot axis 158 of FIG. 15, for example, is arranged perpendicular to the propulsion system axis 124 when viewed, for example, in the longitudinal reference plane. Each guide vane 150 of FIG. 15 is operatively coupled with a vane actuation system 160, which vane actuation system 160 may be discrete from or integrated as part of the blade actuation system 148. The vane actuation system 160 is configured to pivot each guide vane 150 about its own respective vane pivot axis 158. By pivoting each guide vane 150 about its vane pivot axis 158, a pitch of the respective guide vane 150 may be changed. Note, while the vane pivot axis 158 is shown in FIG. 15 as being perpendicular to the propulsion system axis 124, it is contemplated this vane pivot axis 158 may or may not be coincident with the propulsion system axis 124. Moreover, it is contemplated each vane pivot axis 158 may alternatively be angularly offset from the propulsion system axis 124 by an acute angle or an obtuse angle when viewed, for example, in the longitudinal reference plane. Of course, it is contemplated some or all of the guide vanes 150 may be alternatively moved to change the guide vane pitch. Moreover, it is contemplated some or all of the guide vanes 150 may alternatively be fixed pitch guide vanes in other embodiments.

Referring to FIG. 14, the turbine engine 132 includes an inlet section 162, a compressor section 163, a combustor section 164, a turbine section 165 and an exhaust section 166. The compressor section 163 of FIG. 14 includes a low pressure compressor (LPC) section 163A and a high pressure compressor (HPC) section 163B. The turbine section 165 of FIG. 14 includes a high pressure turbine (HPT) section 165A and a low pressure turbine (LPT) section 165B. The turbine engine 132 also includes an engine flowpath 168 (e.g., an annular core flowpath) which extends longitudinally through the aircraft propulsion system 24 of FIG. 14 and its turbine engine 132 from an airflow inlet 170 into the engine flowpath 168 to a combustion products exhaust 172 from the engine flowpath 168. The flowpath inlet 170 is also an airflow inlet into the aircraft propulsion system 24 of FIG. 14 and its turbine engine 132. The flowpath exhaust 172 is also a combustion products exhaust from the aircraft propulsion system 24 of FIG. 14 and its turbine engine 132. At least (or only) the LPC section 163A, the HPC section 163B, the combustor section 164, the HPT section 165A and the LPT section 165B collectively form a core 174 (e.g., a gas generator) of the turbine engine 132.

Each of the engine sections 163A, 163B, 165A and 165B includes a respective bladed rotor 176-179; e.g., a ducted engine rotor. Each of these engine rotors 176-179 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 168. Each of the rotor blades is connected to the respective rotor base. Each of the rotor blades projects radially (e.g., spanwise) out from the respective rotor base into the engine flowpath 168 and to a distal tip of the respective rotor blade.

The HPC rotor 177 is coupled to and rotatable with the HPT rotor 178. The HPC rotor 177 of FIG. 14, for example, is connected to the HPT rotor 178 by a high speed shaft 182. At least (or only) the HPC rotor 177, the HPT rotor 178 and the high speed shaft 182 collectively form a high speed rotating structure 184; e.g., a high speed spool of the engine core 174. This high speed rotating structure 184 of FIG. 14 and its members 177, 178 and 182 are rotatable about the propulsion system axis 124. However, in other embodiments, the high speed rotating structure 184 and its members 177, 178 and 182 may alternatively be rotatable about another rotational axis which is (e.g., laterally and/or angularly) offset from the rotational axis of the propulsor rotor 134.

The LPC rotor 176 is coupled to and rotatable with the LPT rotor 179. The LPC rotor 176 of FIG. 14, for example, is connected to the LPT rotor 179 by a low speed shaft 186. At least (or only) the LPC rotor 176, the LPT rotor 179 and the low speed shaft 186 collectively form a low speed rotating structure 188; e.g., a low speed spool of the engine core 174. This low speed rotating structure 188 of FIG. 14 and its members 176, 179 and 186 are rotatable about the propulsion system axis 124. However, in other embodiments, the low speed rotating structure 188 and its members 176, 179 and 186 may alternatively be rotatable about another rotational axis which is (e.g., laterally and/or angularly) offset from the rotational axis of the propulsor rotor 134.

The low speed rotating structure 188 is coupled to the propulsor rotor 134 through a drivetrain 190. This drivetrain 190 may be configured as a geared drivetrain, where a geartrain 192 (e.g., a transmission, a speed change device, an epicyclic geartrain, etc.) is disposed between and operatively couples the propulsor rotor 134 to the low speed rotating structure 188 and its LPT rotor 179. With this arrangement, the propulsor rotor 134 may rotate at a different (e.g., slower) rotational speed than the low speed rotating structure 188 and its LPT rotor 179. Here, the propulsor rotor 134 and the low speed rotating structure 188 may rotate in a common (the same) direction about the propulsion system axis 124 or in opposite directions about the propulsion system axis 124 depending, for example, upon the specific configuration of the geartrain 192. Alternatively, the drivetrain 190 may be configured as a direct-drive drivetrain, where the geartrain 192 is omitted. With such an arrangement, the propulsor rotor 134 rotates at a common (the same) rotational speed as the low speed rotating structure 188 and its LPT rotor 179.

The engine sections 162-166 may be arranged sequentially along the propulsion system axis 124 and are housed within and/or formed by the housing structure 154. This housing structure 154 includes an engine case 194 (e.g., a gas generator case) and a nacelle 196. The engine case 194 houses one or more of the engine sections 163A-165B; e.g., the engine core 174. The engine case 194 of FIG. 14, for example, extends axially along (e.g., axially overlaps) and extends circumferentially about (e.g., circumscribes) the engine sections 163A-165B and the respective bladed rotors 176-179. The engine case 194 may also house the geartrain 192. The nacelle 196 houses and provides an aerodynamic cover over the engine case 194. An exterior wall of the nacelle 196 of FIG. 14, for example, is disposed radially outboard of, extends axially along (e.g., axially overlaps) and extends circumferentially about (e.g., circumscribes) the engine core 174 and its engine case 194. This nacelle wall may at least partially or completely form the exterior surface 155. With the foregoing arrangement, the bladed rotors 176-179 are disposed within the housing structure 154. By contrast, the propulsor rotor 134 and the guide vane structure 136 are disposed at least partially (or completely) outside of the housing structure 154.

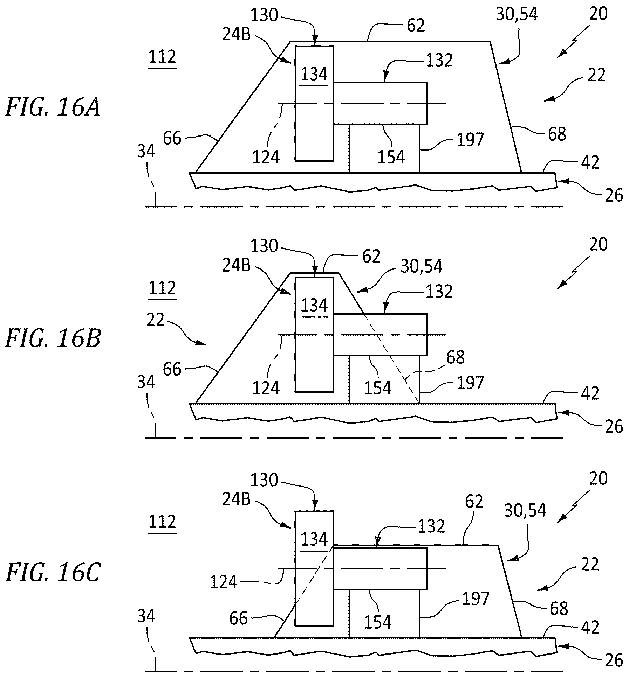

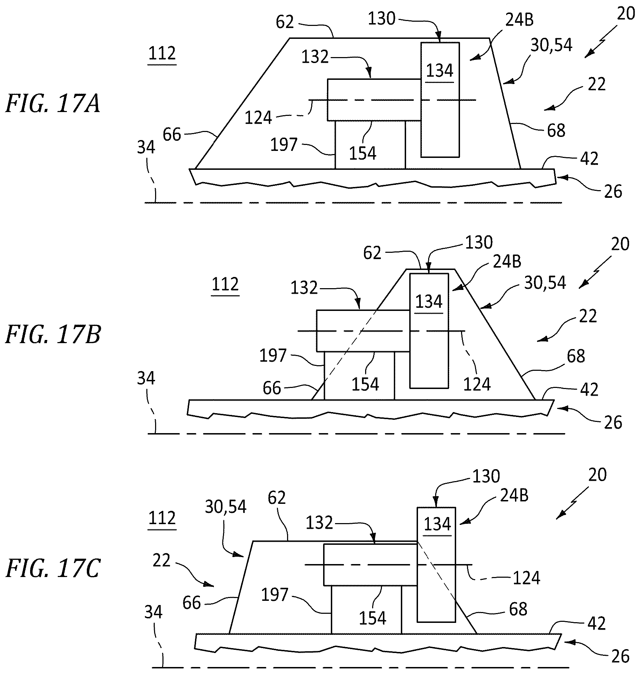

Referring to FIGS. 16A-C and FIGS. 17A-C, the housing structure 154 and, more generally, the respective aircraft propulsion system 24 may be mounted to the aircraft body 26 by a pylon structure 197. The pylon structure 197 of FIGS. 16A-C and FIGS. 17A-C, for example, projects vertically out from the aircraft body 26 and its body top side 42 to a bottom side of the housing structure 154.

Referring to FIG. 14, during operation of the aircraft propulsion system 24, ambient air within the external environment 112 is propelled by the rotating propulsor rotor 134 in the downstream, aft direction towards the propulsion system aft end 128. A major portion (e.g., more than 50%) of this air bypasses the turbine engine 132 to provide forward thrust while a minor portion (e.g., less than 50%) of the air flows into the turbine engine 132. For example, an outer stream of the air propelled by the rotating propulsor rotor 134 flows axially across the guide vane structure 136 and outside of the housing structure 154 and its exterior surface 155; e.g., along an exterior of the nacelle 196. The guide vane structure 136 conditions (e.g., straightens out, de-swirls, etc.) the outer stream of air within the external environment 112 to enhance the forward thrust. By contrast, an inner stream of the air propelled by the rotating propulsor rotor 134 may bypass the guide vane structure 136 and enter the turbine engine 132 and its engine flowpath 168 through the flowpath inlet 170. The air entering the engine flowpath 168 through the flowpath inlet 170 may be referred to as "core air".

The core air is compressed by the LPC rotor 176 and the HPC rotor 177 and directed into a combustion chamber 198 (e.g., an annular combustion chamber) of a combustor 200 (e.g., an annular combustor) in the combustor section 164. Fuel is injected into the combustion chamber 198 by one or more fuel injectors and mixed with the compressed core air to provide a fuel-air mixture. This fuel-air mixture is ignited and combustion products thereof flow through and sequentially drive rotation of the HPT rotor 178 and the LPT rotor 179. The rotation of the HPT rotor 178 and the LPT rotor 179 respectively drive rotation of the HPC rotor 177 and the LPC rotor 176 and, thus, compression of the core air. The rotation of the LPT rotor 179 also drives the rotation of the propulsor rotor 134 through the geartrain 192. The turbine engine 132 and its low speed rotating structure 188 thereby power operation of (e.g., drive rotation of) the propulsor rotor 134 during aircraft propulsion system operation.

As described above, referring to FIGS. 1 and 3, the vane 54 is configured to form the divider (e.g., the structural barrier and/or the flow separator) laterally between the first propulsion system 24A and the second propulsion system 24B. In some embodiments, referring to FIG. 16A or 17A, the vane 54 may (e.g., completely) longitudinally and vertically overlap each aircraft propulsion system 24 and its members 130 and 132. The vane 54 may thereby block (e.g., all) straight lines-of-sight / (e.g., all) straight line trajectories from the first propulsion system 24A to the second propulsion system 24B (see FIGS. 1 and 3), and from the second propulsion system 24B to the first propulsion system 24A. In other embodiments, referring to FIG. 16B or 17B, the vane 54 may (e.g., completely) longitudinally and vertically overlap each propulsion section 130 and its propulsor rotor 134. The vane 54 may thereby block (e.g., all) straight lines-of-sight / (e.g., all) straight line trajectories from the propulsor rotor 134 of the first propulsion system 24A to the second propulsion system 24B (see FIGS. 1 and 3), and from the propulsor rotor 134 of the second propulsion system 24B to the first propulsion system 24A. In still other embodiments, referring to FIG. 16C or 17C, the vane 54 may (e.g., completely) longitudinally and vertically overlap each turbine engine 132 (e.g., each aircraft powerplant 84), or at least its engine core 174 (see FIG. 14). The vane 54 may thereby block (e.g., all) straight lines-of-sight / (e.g., all) straight line trajectories from the turbine engine 132 of the first propulsion system 24A to the second propulsion system 24B (see FIGS. 1 and 3), and from the turbine engine 132 of the second propulsion system 24B to the first propulsion system 24A.

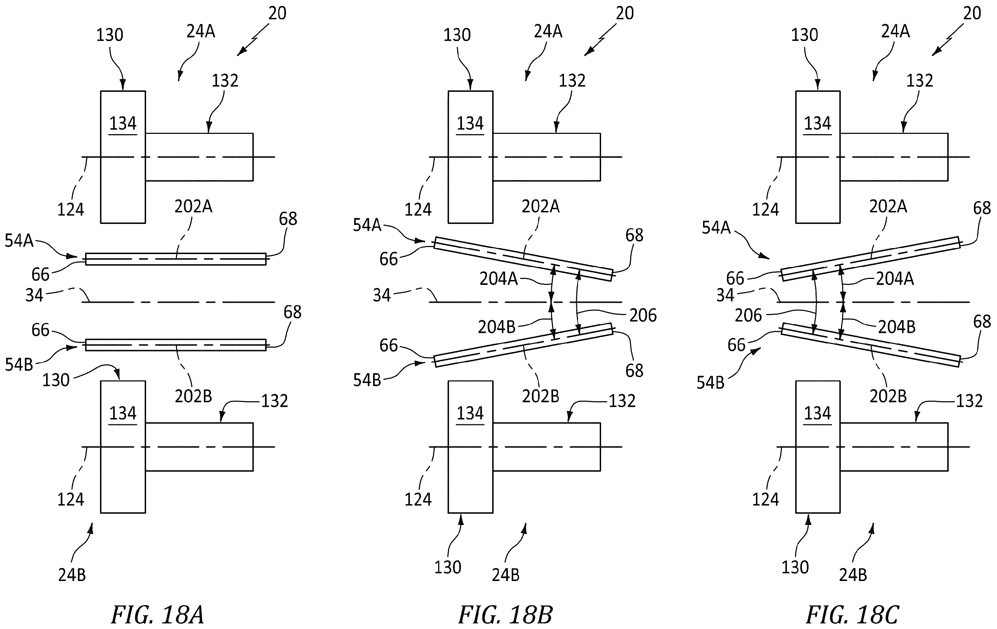

In some embodiments, referring to FIG. 1, the aircraft airframe 22 may include a single vane 54 laterally between the aircraft propulsion systems 24. In other embodiments, referring to FIGS. 18A-C (see also FIG. 10), the aircraft airframe 22 may include multiple of the vanes 54A and 54B laterally between the aircraft propulsion systems 24. These vanes 54 may be longitudinally aligned along the centerline 34. The vanes 54 may also have an identical or mirror image configuration. In the embodiment of FIG. 18A, a centerline 202A of the first vane 54A is parallel with a centerline 202B of the second vane 54B and/or the centerline 34. In the embodiment of FIGS. 18B and 18C, the centerline 202A, 202B (generally referred to as "202") of each vane 54A, 54B is angularly offset from the centerline 34 by an offset angle 204A, 204B (generally referred to as "204"). This offset angle 204 may be a non-zero acute angle less than, for example, forty-five degrees (45°), thirty degrees (30°) or fifteen degrees (15°). The centerline 202 of each vane 54 may also be angularly offset from the centerline 202 of the other vane 54 by an offset angle 206. In FIG. 18B, the vanes 54 laterally converge as those vanes 54 extend longitudinally along the centerline 34 in an aft, downstream direction. In FIG. 18C, the vanes 54 laterally diverge as those vanes 54 extend longitudinally along the centerline 34 in the aft, downstream direction.

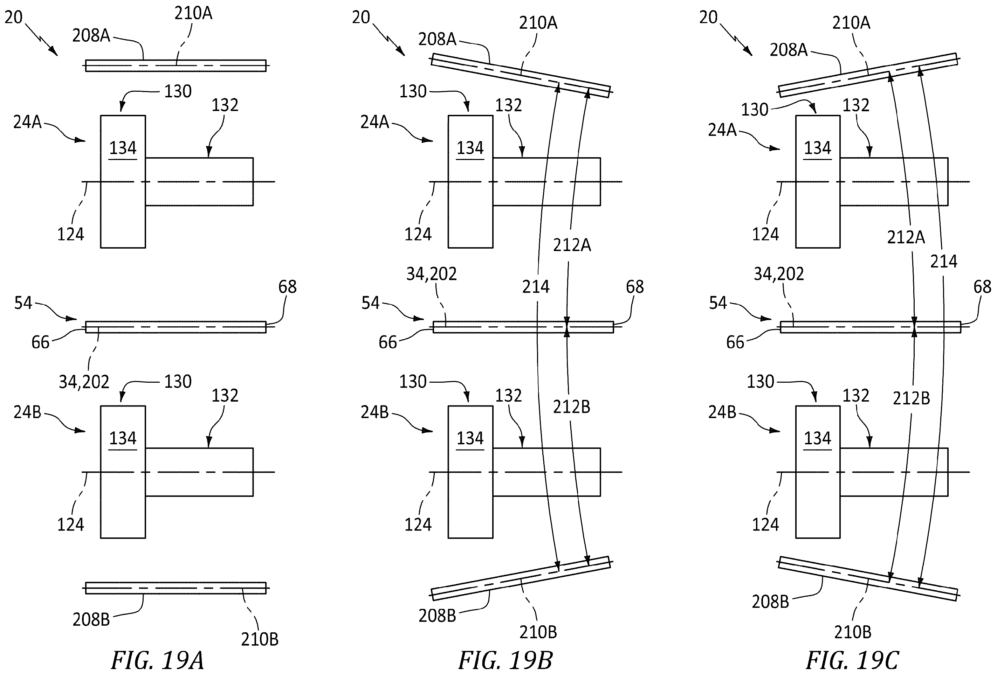

In some embodiments, referring to FIG. 19A-C, the aircraft airframe 22 may include one or more side vanes 208A and 208B (generally referred to as "208"). Here, each aircraft propulsion system 24 is disposed laterally between the vane 54 and a respective one of the side vanes 208. Each side vane 208 may have a similar or the same configuration as the vane 54. In the embodiment of FIG. 19A, the centerline 202 of the vane 54 is parallel with a centerline 210A, 210B (generally referred to as "210") of each side vane 208A, 208B. In the embodiment of FIGS. 19B and 19C, the centerline 210A, 210B of each side vane 208A, 208B is angularly offset from the centerline 34 by an offset angle 212A, 212B (generally referred to as "212"). This offset angle 212 may be a non-zero acute angle less than, for example, forty-five degrees (45°), thirty degrees (30°) or fifteen degrees (15°). The centerline 210 of each side vane 208 may also be angularly offset from the centerline 210 of the other side vane 208 by an offset angle 214. In FIG. 19B, the side vanes 208 laterally converge as those side vanes 208 extend longitudinally along the centerline 34 in the aft, downstream direction. In FIG. 19C, the side vanes 208 laterally diverge as those side vanes 208 extend longitudinally along the centerline 34 in the aft, downstream direction.

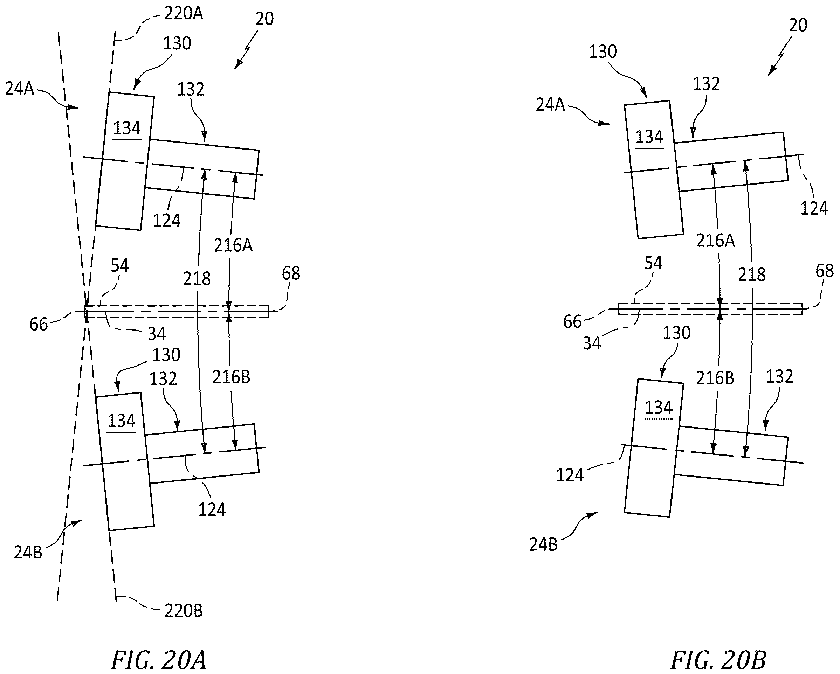

In some embodiments, referring to FIG. 1, the propulsion system axis 124 of each aircraft propulsion system 24 may be parallel with the centerline 34. The propulsion system axes 124 of the aircraft propulsion systems 24 may also be parallel with one another. In other embodiments, referring to FIGS. 20A and 20B, the propulsion system axis 124 of each aircraft propulsion system 24A, 24B may be angularly offset from the centerline 34 by an offset angle 216A, 216B (generally referred to as "216"). This offset angle 216 may be a non-zero acute angle, for example, less than thirty degrees (30°) and/or greater than one-half of one degree (0.5°). The propulsion system axis 124 of the first propulsion system 24A may also be angularly offset from the propulsion system axis 124 of the second propulsion system 24B by an offset angle 218. In FIG. 20A, the propulsion system axes 124 laterally converge as those propulsion system axes 124 extend longitudinally along the centerline 34 in the aft, downstream direction. In FIG. 20B, the propulsion system axes 124 laterally diverge as those propulsion system axes 124 extend longitudinally along the centerline 34 in the aft, downstream direction.

Referring to FIG. 20A, each propulsor rotor 134 may be associated with a propulsor reference plane 220A, 220B (generally referred to as "220"); e.g., a face plane. This propulsor reference plane 220 is disposed at the respective propulsor rotor 134 and is perpendicular to the propulsion system axis 124 of that propulsor rotor 134. The offset angle 216, 218 may be selected such that the propulsor reference plane 220 is not coincident with the other aircraft propulsion system 24. For example, the first propulsion system 24A may be disposed outside of the propulsor reference plane 220B for the second propulsion system 24B. The second propulsion system 24B may be disposed outside of the propulsor reference plane 220A for the first propulsion system 24A. With such an arrangement, the vane(s) 54 may be omitted since debris thrown by a propulsor rotor 134 will likely travel substantially along its associated propulsor reference plane 220, at least in close proximity to the aircraft 20. With this in mind, the converging arrangement of FIG. 20A may be preferrable (at least cross-propulsion system interference-wise) for aircraft propulsion systems with a tractor configuration (e.g., where the propulsion section is disposed at its propulsion system forward end) for select applications. By contrast, the diverging arrangement of FIG. 20B may be preferrable (at least cross-propulsion system interference-wise) for aircraft propulsion systems with a pusher configuration (e.g., where the propulsion section is disposed at its propulsion system aft end) for select applications.

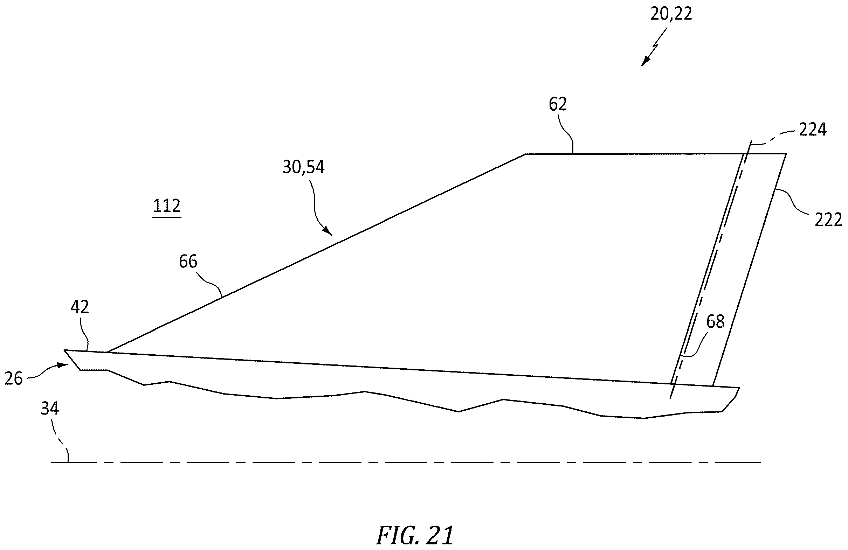

In some embodiments, referring to FIG. 21, the vane 54 may be configured with a rudder 222 at its vane trailing edge 68, where the rudder 222 may be pivotally attached to the vane 54 and pivotable about a pivot axis 224. This rudder 222 may be provided in addition to (or as an alternative to) inclusion of the air system 32 described above. Moreover, while any vane 54 described above may be configured with the air system 32, it is contemplated the air system 32 may be omitted in other embodiments particularly, for example, where the vane(s) 54 is/are included primarily as the structural barrier laterally between the aircraft propulsion systems 24.

The engine flowpath 168 of FIG. 14 extends longitudinally from the flowpath inlet 170, sequentially through the inlet section 162, the LPC section 163A, the HPC section 163B, the combustor section 164, the HPT section 165A, the LPT section 165B and the exhaust section 166, to the flowpath exhaust 172. The engine flowpath 168 of FIG. 14 is configured such that the core air and the combustion products generally flow in the aft, downstream direction towards the propulsion system aft end 128. The core air and the combustion products thereby flow along with the ambient air propelled by the rotating propulsor rotor 134 in a common axial direction - the downstream, aft direction. The turbine engine 132 of the present invention, however, is not limited to such an exemplary common flow engine arrangement. For example, the engine flowpath 168 may alternatively be configured such that the core air and the combustion products generally flow in a forward, upstream direction towards the propulsion system forward end 126. The core air and the combustion products may thereby flow in an opposite direction as the ambient air propelled by the rotating propulsor rotor 134. Here, the turbine engine 132 may have a reverse flow engine arrangement.

The aircraft propulsion system 24 of FIG. 14 and its propulsion section 130 are described above with a tractor configuration; e.g., where the propulsor rotor 134 is disposed at or otherwise near the propulsion system forward end 126. It is contemplated, however, the propulsion section 130 may alternatively be disposed at or otherwise near the propulsion system aft end 128 to provide a pusher fan configuration. It is also contemplated one of the aircraft propulsion systems (e.g., 24A, 24B) may have a tractor configuration (e.g., see FIGS. 16A-C), while the other one of the aircraft propulsion systems (e.g., 24B, 24A) may have a pusher configuration (e.g., see FIGS. 17A-C). The propulsor rotors 134 of the aircraft propulsion systems 24A and 24B may thereby be axially misaligned (e.g., axially offset) such that, for example, debris propelled by one of the propulsor rotors 134 does not hit the other one of the propulsor rotors 134, and vice versa. With such an arrangement, the vane 54 may (or may not) be omitted where, for example, the primary functionality of that vane 54 was to provide a debris barrier between the aircraft propulsion systems 24. Moreover, while the turbine engine 132 is described above with a particular two rotating structure arrangement, the present invention is not limited thereto. For example, the LPC rotor 176 may be omitted to configure the LPT rotor 179 as a power turbine (PT) rotor for the propulsor rotor 134. In another example, the turbine engine 132 may also include another rotating structure; e.g., an intermediate speed spool for the engine core 174.

The guide vane structure 136 is described above as a fixed (e.g., non-rotatable) guide vane structure. It is contemplated, however, the guide vane structure 136 may alternatively be selectively rotatable about the propulsion system axis 124. With such an arrangement, the aircraft propulsion system 24 may be configured as an open rotor propulsion system with a swirl recovery blade (SRB) open rotor architecture. More particularly, the aircraft propulsion system 24 may operate as: (A) a counter-rotating open rotor (CROR) propulsion system during a dual rotor mode of operation (e.g., when both the propulsor rotor 134 and the structure 136 are counter-rotating about the propulsion system axis 124); and (B) a single open rotor and swirl recovery vane (SRV) propulsion system during a single rotor mode of operation (e.g., when the propulsor rotor 134 is rotating and the structure 136 is rotationally fixed about the propulsion system axis 124). Note, when the guide vane structure 136 is configured to selectively rotate about the propulsion system axis 124, the moving guide vanes 150 operate as propulsor blades. Here, it is contemplated the SRB guide vane structures 136 of the aircraft propulsion systems 24 may be similarly situated as described above with respect to the propulsor rotors 134 shown in FIG. 20A or 20B. More particularly, a rotational axis of the SRB guide vane structure 136 of the first propulsion system 24A may be angularly offset from a rotational axis of the SRB guide vane structure 136 of the second propulsion system 24B such that debris propelled by one of the SRB guide vane structures 136 (when moving) and/or debris propelled by the associated propulsor rotor 134 does not hit the other one of the SRB guide vane structures 136 (when moving or stationary) and/or the associated propulsor rotor 134, and vice versa.

In some embodiments, referring to FIG. 14, the turbine engine 132 may be disposed in close proximity to the propulsion section 130. The guide vane structure 136 of FIG. 14, for example, is configured as part of or otherwise connected to the housing structure 154 which houses the turbine engine 132 and its engine core 174. In other embodiments, the turbine engine 132 may be configured remote from the propulsion section 130. The turbine engine 132, for example, may be disposed within the aircraft airframe 22 and, more particularly, within the aircraft body 26. In another example, the turbine engine 132 and the propulsion section 130 may be disposed to opposing (e.g., vertical) sides of the aircraft airframe 22 and, more particularly, within the aircraft body 26.

The aircraft propulsion system 24 of FIG. 14 and its propulsion section 130 are described as including the guide vane structure 136 with an SRV or SRB configuration. The present invention, however, is not limited to such an exemplary propulsion system configurations. For example, each aircraft propulsion system 24 may alternatively be configured without an open guide vane structure. The aircraft propulsion system 24 may thereby be configured as a single rotor (SR) open rotor propulsion system. In another example, each aircraft propulsion system 24 may alternatively be configured with a set of the open propulsor rotors (e.g., counter-rotating propulsor rotors) operatively coupled to the turbine engine 132 through the geartrain 192. The aircraft propulsion system 24 may thereby be configured as a counter-rotating open rotor (CROR) propulsion system.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft, comprising:
an airframe including a body, a first wing, a second wing and a vane, the body extending longitudinally along a longitudinal centerline from a forward end of the body to an aft end of the body, the first wing and the second wing disposed to opposing lateral sides of the body, the vane projecting vertically out from the body to a tip of the vane, and the vane extending longitudinally along the body from a leading edge of the vane to a trailing edge of the vane;
a first open rotor propulsion system vertically above and mounted to the body; and
a second open rotor propulsion system vertically above and mounted to the body, wherein the vane is configured as a structural barrier laterally between the first open rotor propulsion system and the second open rotor propulsion system.

2. The assembly of claim 1, wherein the vane longitudinally overlaps:
an entirety of the first open rotor propulsion system; and/or
an entirety of the second open rotor propulsion system.

3. The assembly of claim 1 or 2, wherein the vane vertically overlaps:
an entirety of the first open rotor propulsion system; and/or
an entirety of the second open rotor propulsion system.

4. The assembly of claim 1, 2 or 3, wherein the vane blocks a direct line of sight from the first open rotor propulsion system to the second open rotor propulsion system.

5. The assembly of any preceding claim, wherein:
the first open rotor propulsion system comprises a first open propulsor rotor;
the second open rotor propulsion system comprises a second open propulsor rotor; and
the structural barrier is laterally between, longitudinally overlaps and vertically overlaps the first open propulsor rotor and the second open propulsor rotor.

6. The assembly of any preceding claim, wherein:
the first open rotor propulsion system comprises a first powerplant;
the second open rotor propulsion system comprises a second powerplant; and
the structural barrier is laterally between, longitudinally overlaps and vertically overlaps the first powerplant and the second powerplant.

7. The assembly of any preceding claim, wherein:
the vane is a first vane, and the airframe further includes a second vane;
the second vane projects vertically out from the body to a tip of the second vane; and
the second vane extends longitudinally along the body from a leading edge of the second vane to a trailing edge of the second vane, wherein:
the second vane is further configured as the structural barrier laterally between the first open rotor propulsion system and the second open rotor propulsion system; and/or
the first open rotor propulsion system is laterally between the first vane and the second vane.

8. The assembly of claim 7, wherein:
a centerline of the first vane is parallel with a centerline of the second vane; or
a centerline of the first vane is angularly offset from a centerline of the second vane by an acute offset angle.

9. The assembly of any preceding claim, wherein:
the first open rotor propulsion system comprises a first open propulsor rotor rotatable about a first axis; and
the second open rotor propulsion system comprises a second open propulsor rotor rotatable about a second axis, wherein:
at least one of the first axis or the second axis is parallel to the longitudinal centerline; and/or
at least one of the first axis or the second axis is angularly offset from the longitudinal centerline by an acute offset angle.

10. The assembly of any preceding claim, further comprising a rudder pivotally attached to the vane at the trailing edge of the vane.

11. An assembly for an aircraft, comprising:
an airframe including a body, a first wing and a second wing, the body extending longitudinally along a longitudinal centerline from a forward end of the body to an aft end of the body, the first wing and the second wing disposed to opposing lateral sides of the body, the first wing projecting spanwise out from the body to a tip of the first wing, and the second wing projecting spanwise out from the body to a tip of the second wing;
a first propulsion system mounted to the body, the first propulsion system comprising a first propulsor rotor rotatable about a first axis, and the first axis angularly offset from the longitudinal centerline by a first offset angle between 0.5 degrees and 30 degrees; and
a second propulsion system mounted to the body, the second propulsion system comprising a second propulsor rotor rotatable about a second axis, and the second axis angularly offset from the longitudinal centerline by a second offset angle between 0.5 degrees and 30 degrees.

12. The assembly of claim 11, wherein:
the second propulsion system is outside of a first reference plane perpendicular to the first axis at the first propulsor rotor; and
the first propulsion system is outside of a second reference plane perpendicular to the second axis at the second propulsor rotor.

13. The assembly of claim 11 or 12, wherein:
the first propulsor rotor is a first open propulsor rotor; and
the second propulsor rotor is a second open propulsor rotor.

14. The assembly of claim 11, 12 or 13, wherein the airframe further includes a vane laterally between, longitudinally overlapping and vertically overlapping the first propulsion system and the second propulsion system.

15. An aircraft, comprising:
a blended wing body airframe extending longitudinally along a longitudinal centerline from a forward end of the blended wing body airframe to an aft end of the blended wing body airframe;
a first propulsion system mounted to the blended wing body airframe, the first propulsion system comprising a first open propulsor rotor; and
a second propulsion system mounted to the blended wing body airframe, the second propulsion system longitudinally aligned with the first propulsion system along the longitudinal centerline, and the second propulsion system comprising a second open propulsor rotor, wherein the aircraft is configured such that:
debris thrown from the first open propulsor rotor will not hit the second propulsion system along a straight line trajectory; and
debris thrown from the second open propulsor rotor will not hit the first propulsion system along a straight line trajectory.
